# EUROPEAN PATENT APPLICATION

(11) **EP 2 362 664 A1**
(43) Date of publication of application: **31.08.2011**
(21) Application number: 10831589.6
(22) Date of filing: 17.11.2010
(51) Int. Cl.: H04N 13/00, G09G 5/36, H04N 7/173, H04N 7/26

(54) **IMAGE RECEPTION DEVICE**

(30) Priority: 17.11.2009 JP 2009262185
(71) Applicant: Sony Corporation, Tokyo 108-0075 (JP)
(72) Inventor: NAGANO, Hidetoshi, Tokyo 108-0075 (JP)
(74) Representative: Davies, Simon Robert
(86) International application number: PCT/JP2010/070498
(87) International publication number: WO 2011/062195

(57) **Abstract**

An image receiver according to the present invention includes a receiving unit that receives an integrated image in which a first image and a second image are arranged in one frame and an reception unit that receives region information indicating a region of the first image transmitted along with the integrated image is provided, wherein a non-stereoscopic video display mode in which only the first image is displayed based on the region information and/or a stereoscopic video display mode in which the first image and the second image are displayed as stereoscopic video are included.

## Description

### Technical Field

The present invention relates to an image receiver.

### Background Art

As described in Patent Literature shown below, a method of alternately supplying a left-eye image and a right-eye image with a parallax therebetween to a display in a predetermined cycle and observing these images by using glasses including a liquid crystal shutter driven in synchronization with the predetermined cycle has been known.

Moreover, services such as electronic program guides and data broadcasting are provided in the current digital broadcasting and services other than normal video and audio programs can be received in accordance with user's demands.

### Citation List

### Patent Literature

| | |
|---|---|
| Patent Literature 1: | JP 9-138384A |
| Patent Literature 2: | JP 2000-36969A |
| Patent Literature 3: | JP 2003-45343A |

### Summary of Invention

### Technical Problem

Under these circumstances, normal programs are also demanded to further enrich services by newly adding value to video and audio. To add value to video, a scheme may be considered in which video having added value (hereinafter, referred to as an additional information dynamic image or second image) is transmitted in addition to normal video (hereinafter, referred to as a normal viewing dynamic image or first image) so that dynamic images having high added value using normal viewing dynamic images and additional information dynamic images are presented on the receiving side. Normal viewing dynamic images include widely used two-dimensional images and non-stereoscopic images.

To transmit additional information dynamic images to improve added value of content along with normal viewing dynamic images produced for normal viewing, normal viewing dynamic images and additional information dynamic images may be encoded and transmitted separately and decoded separately to present dynamic images, but in this case, it is necessary to perform two decoding operations on the receiver side and the price of a receiver mounted with two decoders will rise.

If, on the other hand, normal viewing dynamic images and additional information dynamic images are contained in a single screen, normal viewing dynamic images and additional information dynamic images are encoded together so that these images can be encoded by a single encoder and also normal viewing dynamic images and additional information dynamic images can be decoded by a single decoder. However, normal viewing dynamic images and additional information dynamic images are always displayed as output of the receiver so that the display is different from normal viewing dynamic images originally intended by the transmitting side.

Consider a case when, for example, double-eye stereoscopic dynamic images are transmitted as video having high added value compared with normal video. In this case, a single-eye dynamic image can be considered as a normal viewing dynamic image so that the other single-eye dynamic image is transmitted as an additional information dynamic image.

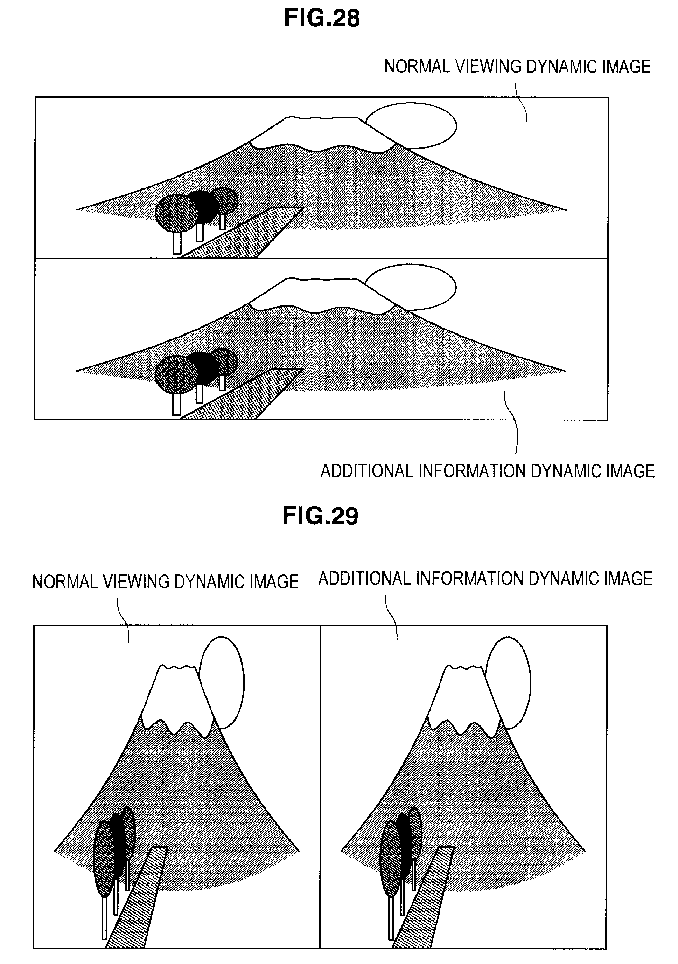

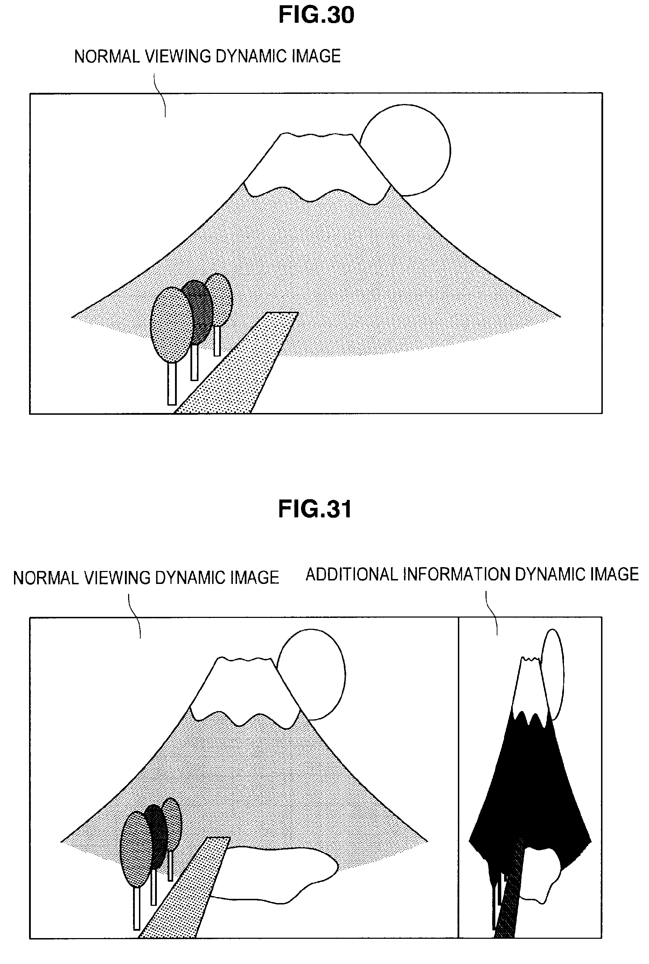

As a result, in a conventional receiver incapable of displaying stereoscopic vision, as shown in FIGS. 28 and 29, a normal viewing dynamic image and an additional information dynamic image are displayed simultaneously side by side in the same screen by being contracted vertically or horizontally. Since left and right dynamic images in double-eye stereoscopic vision have only a minor difference in content, it is desirable to be able to view, like in Fig. 30 rather than Figs. 28 and 29, only single-eye dynamic images (normal viewing dynamic images) in the correct aspect ratio in a receiver incapable of displaying double-eye stereoscopic vision.

The present invention has been made in view of the above issue and it is desirable to provide a novel and improved image receiver capable of processing additional information dynamic images along with normal viewing dynamic images while reducing changes of current transmitters/receivers to a minimum in transmission of dynamic images.

### Solution to Problem

According to an aspect of the present invention in order to achieve the above-mentioned object, there is provided an image receiver including a receiving unit that receives an integrated image in which a first image and a second image are arranged in one frame and an reception unit that receives region information indicating a region of the first image transmitted along with the integrated image, wherein a non-stereoscopic video display mode in which only the first image is displayed based on the region information and/or a stereoscopic video display mode in which the first image and the second image are displayed as stereoscopic video are included.

The non-stereoscopic video display mode and the stereoscopic video display mode may be switched based on information indicating that the integrated image is a stereoscopic video.

The first image may be a left-eye image and the second image may be a right-eye image.

The integrated image and the region information may be encoded by an H264/AVC codec and the region information may be Crop parameters.

The Crop parameters may be contained in a sequence parameter set (SPS).

### Advantageous Effects of Invention

According to the present invention, additional information dynamic images can be processed along with normal viewing dynamic images while reducing changes of current transmitters/receivers to a minimum in transmission of dynamic images.

### Brief Description of Drawings

[Fig. 1] Fig. 1 is a schematic diagram showing a state in which a normal viewing dynamic image and an additional information dynamic image are displayed in one screen.
[Fig. 2] Fig. 2 is a schematic diagram showing the state in which arrangement information of Fig. 1 is represented as a table.
[Fig. 3] Fig. 3 is a schematic diagram showing crop parameters and parameters related to a rectangular region of a region to be cut out.
[Fig. 4] Fig. 4 is a schematic diagram showing stream information of Dolby's AC-3 audio.
[Fig. 5] Fig. 5 is a schematic diagram showing a case when an additional information dynamic image descriptor is added to the stream information of PMT.
[Fig. 6] Fig. 6 is a diagram showing a content example of the additional information dynamic image descriptor.
[Fig. 7] Fig. 7 is a diagram showing a hierarchy of additional information dynamic image SEI.
[Fig. 8] Fig. 8 is a diagram showing a case when additional information dynamic image presence information is transmitted as a new private section.
[Fig. 9] Fig. 9 is a schematic diagram showing a case when a cutout position of the additional information dynamic image is arranged immediately after the normal viewing dynamic image.
[Fig. 10] Fig. 10 is a schematic diagram showing agreement content when the cutout position of the additional information dynamic image is arranged immediately after the normal viewing dynamic image.
[Fig. 11] Fig. 11 is a schematic diagram showing a case when a right-eye dynamic image is arranged spaced out with regard to a left-eye image.
[Fig. 12] Fig. 12 is a schematic diagram showing the agreement content for the case of Fig. 11.
[Fig. 13] Fig. 13 is a schematic diagram showing an arrangement state of an integrated image when horizontal arrangement of dynamic images of multi-stereoscopic vision is agreed.
[Fig. 14] Fig. 14 is a schematic diagram showing the arrangement state of the integrated image under an agreement under which as many dynamic images as possible are arranged horizontally and if there is any remaining dynamic image, such dynamic images are arranged vertically.
[Fig. 15] Fig. 15 is a schematic diagram showing an integrated dynamic image example in which main stereoscopic vision dynamic images are arranged in the upper part and supplementary stereoscopic vision dynamic images are arranged in the lower part.
[Fig. 16] Fig. 16 is a schematic diagram showing content when additional information dynamic image SEI is newly added to H.264.
[Fig. 17] Fig. 17 is a schematic diagram showing the state in which there is no required item of information in sei_message when SEI is newly set up for each type of the additional information dynamic image.
[Fig. 18] Fig. 18 is a schematic diagram showing content when an additional information dynamic image descriptor is newly added to PMT.
[Fig. 19] Fig. 19 is a schematic diagram showing information inside the descriptor when the descriptor is prepared for each type of the additional information dynamic image.
[Fig. 20] Fig. 20 is a schematic diagram showing content of private_data byte when data that transmits additional information dynamic image presence information is added to private section of MPEG2-TS.
[Fig. 21] Fig. 21 is a schematic diagram showing content when additional information dynamic image SEI is newly added to H.264.
[Fig. 22] Fig. 22 is a block diagram showing a transmitter according to the present embodiment.
[Fig. 23] Fig. 23 is a schematic diagram showing an existing transmitter.
[Fig. 24] Fig. 24 is a schematic diagram showing a receiver according to the present embodiment.
[Fig. 25] Fig. 25 is a schematic diagram showing an existing receiver.
[Fig. 26] Fig. 26 is a diagram showing content when an additional information dynamic image descriptor is newly added to a PMT descriptor.
[Fig. 27] Fig. 27 is a diagram showing content of private_data_byte when data that transmits additional information dynamic image presence information is added to private section of MPEG2-TS.
[Fig. 28] Fig. 28 is a schematic diagram showing the state in which the normal viewing dynamic image and the additional information dynamic image are displayed simultaneously side by side in the same screen after being contracted vertically or horizontally.
[Fig. 29] Fig. 29 is a schematic diagram showing the state in which the normal viewing dynamic image and the additional information dynamic image are displayed simultaneously side by side in the same screen after being contracted vertically or horizontally.
[Fig. 30] Fig. 30 is a schematic diagram showing the state in which only the single-eye dynamic image (normal viewing dynamic image) is displayed in the correct aspect ratio.
[Fig. 31] Fig. 31 is a schematic diagram showing a case when the normal viewing dynamic image is arranged as the left-eye dynamic image of 1440 x 1080 in the integrated image and the additional information dynamic image as the left-eye dynamic image of 480 x 1080.
[Fig. 32] Fig. 32 is a schematic diagram showing a case when the normal viewing dynamic image is arranged as a center dynamic image of 1920 x 810 in the integrated image and the additional information dynamic images as two images (left dynamic image, right dynamic image) of 960 x 270.
[Fig. 33] Fig. 33 is a schematic diagram showing a processing flow chart of the transmitter when H.264 is used as an encoder and the additional information dynamic image SEI is used.
[Fig. 34] Fig. 34 is a schematic diagram showing a processing flow chart of the transmitter when H.264 is used as an encoder and the additional information dynamic image descriptor is used.
[Fig. 35] Fig. 35 is a schematic diagram showing a flow chart of the transmitter when H.264 is used as an encoder and an additional information dynamic image section is used.
[Fig. 36] Fig. 36 is a flow chart of the receiver when the additional information dynamic image SEI to be added to H.264 is used.
[Fig. 37] Fig. 37 is a flow chart of the receiver when the additional information dynamic image descriptor to be added to the PMT descriptor is used.
[Fig. 38] Fig. 38 is a flow chart of the receiver when the additional information dynamic image section to be added to MPEG2-TS is used.
[Fig. 39] Fig. 39 is a flow chart of the receiver when the additional information dynamic image SEI to be added to H.264 is used.
[Fig. 40] Fig. 40 is a flow chart of the receiver when the additional information dynamic image descriptor to be added to the PMT descriptor is used.
[Fig. 41] Fig. 41 is a flow chart of the receiver when the additional information dynamic image section to be added to MPEG2-TS is used.
[Fig. 42] Fig. 42 is a flow chart of the receiver when the additional information dynamic image SEI to be added to H.264 is used.
[Fig. 43] Fig. 43 is a flow chart of the receiver when the additional information dynamic image descriptor to be added to the PMT descriptor is used.
[Fig. 44] Fig. 44 is a flow chart of the receiver when the additional information dynamic image section to be added to MPEG2-TS is used.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description thereof will be provided in the order shown below:
1. First Embodiment (example of transmitting any plurality of images)
2. Second Embodiment (application to stereoscopic vision images)

### [1. First Embodiment]

First, the concept of a system according to the present embodiment will be described based on drawings. Here, a case when dynamic images that are not used for double-eye stereoscopic vision are transmitted as additional information dynamic images will be described by taking content of golf relay broadcasting as an example. The content of golf relay broadcasting is only an illustration and the scope of application of the present invention is not limited to the golf relay broadcasting.

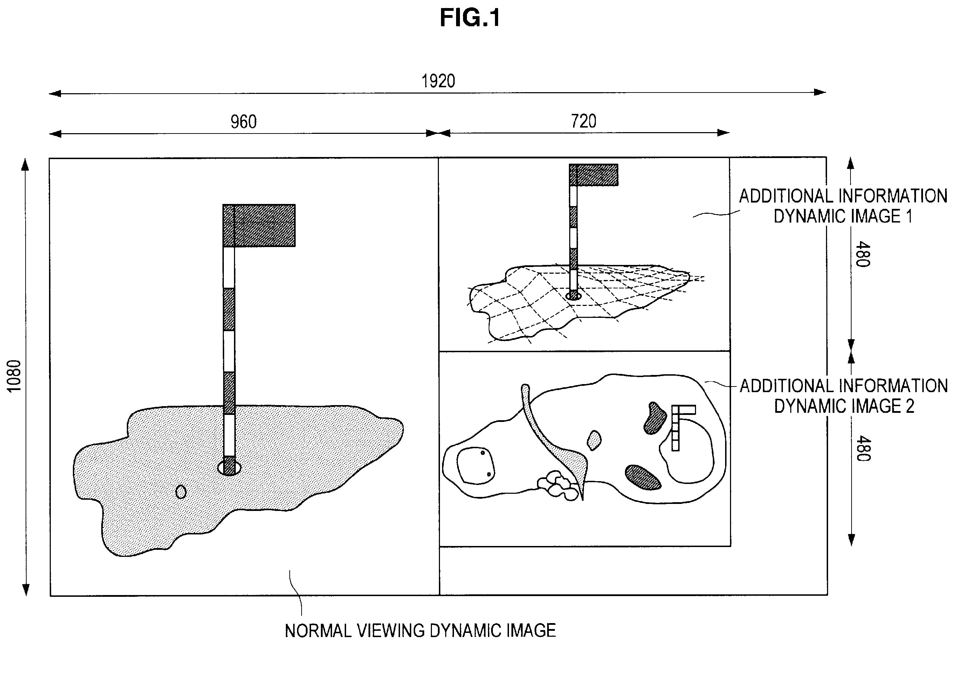

Fig. 1 shows a state in which a normal viewing dynamic image and additional information dynamic image are displayed in one screen and numbers in Fig. 1 indicate the numbers of pixels. Here, a case when the method of the present embodiment is used for a situation around the green. The normal viewing dynamic image is a dynamic image normally relayed in golf relay broadcasting and corresponds to the current program content (original version). On the other hand, the additional information dynamic image is a dynamic image separate from the normal viewing dynamic image and enriches program content by providing a dynamic image created from an angle different from that of the normal viewing dynamic image.

If, for example, as shown in Fig. 1, video of the green is displayed as the normal viewing dynamic image, the user is enabled to see video scenes from various angles by using dynamic images showing the inclination or the grain of the grass of the green or dynamic images showing another player who has holed out closely watching a monitor as additional information dynamic images. If the normal viewing dynamic image is a video showing a player walking on a fairway, using reproduction images of a driver shot immediately before or dynamic images showing a gallery as additional information dynamic images can be considered.

### <Integrated dynamic image>

In the present embodiment, a normal viewing dynamic image and an additional information dynamic image are arranged in one frame (or field) and compression/decompression processing is performed thereon as one dynamic image (hereinafter, described as an integrated dynamic image) to minimize a change from the current dynamic image compression/decompression unit.

Fig. 1 shows a frame of an integrated dynamic image when a normal viewing dynamic image showing a ball on the green, a dynamic image showing the entire hole from above, and a dynamic image illustrating the green inclination are arranged in one frame. The validity of the present embodiment does not change if the frame is replaced by the field.

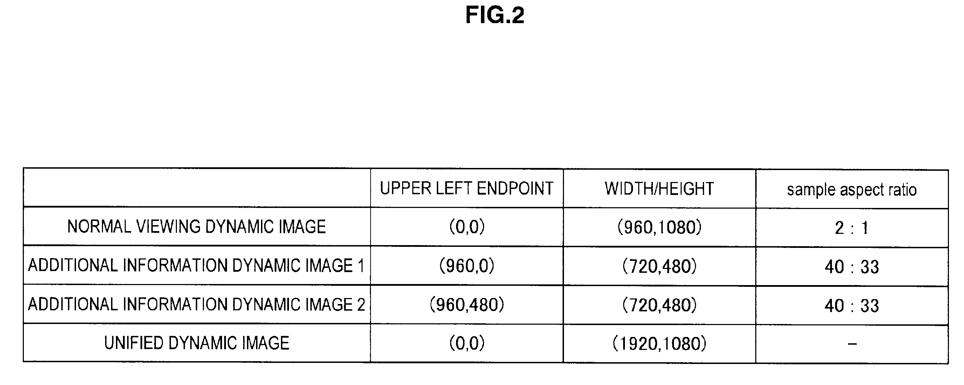

Fig. 2 shows arrangement information of Fig. 1 in tabular form. Fig. 2 shows arrangement information of each dynamic image when the size of the integrated dynamic image is 1920 x 1080 pixels and coordinates at the upper left corner of the integrated image is set as (0, 0). Coordinates of the normal viewing dynamic image at the upper left endpoint are (0, 0) because the image is pasted from the upper left corner. The normal viewing dynamic image is an image contracted in the width direction (horizontal direction) by half and has 960 x 1080 pixels as the width x height. Due to the contraction, the sample aspect ratio becomes 2:1. On the other hand, the additional information dynamic images have the image size of 720 x 480 pixels and are assumed to be based on dynamic images created by assuming a screen of 16:9 and so that sample aspect ratio thereof becomes 40:33. There is no need for the region/aspect ratio of the two additional information dynamic images to match and the number of additional information dynamic images is not limited to two.

### <Current broadcasting>

A case when the above integrated dynamic image is transmitted by the current digital broadcasting system will be described. In the current digital broadcasting system, dynamic images and audio are encoded and transmitted by the packet multiplexing method called MPEG2-TS (transport stream). Mainstream codecs of dynamic image include MPEG2 VIDEO and H.264 (AVC) and dynamic images are compressed by these codecs before being transmitted.

### <Configuration of the transmitter>

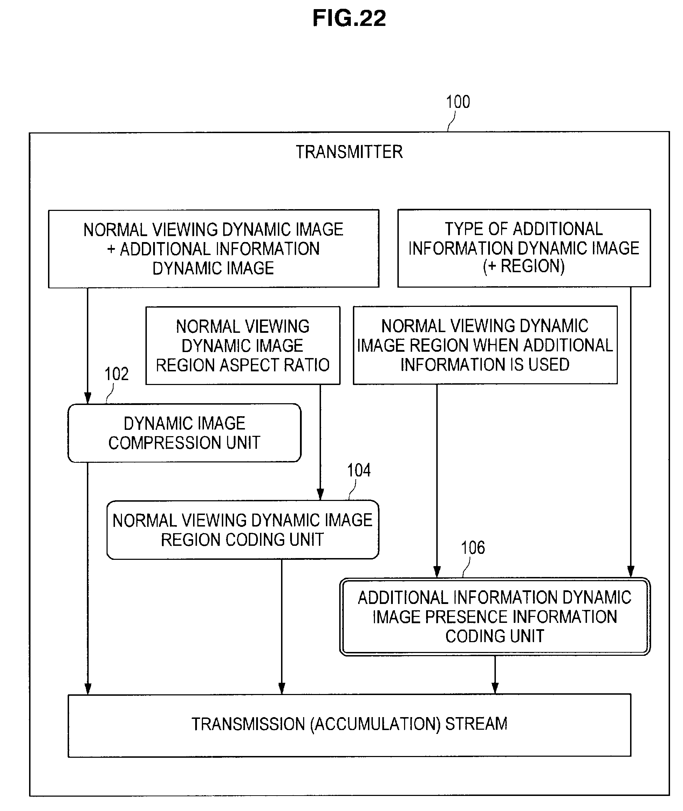

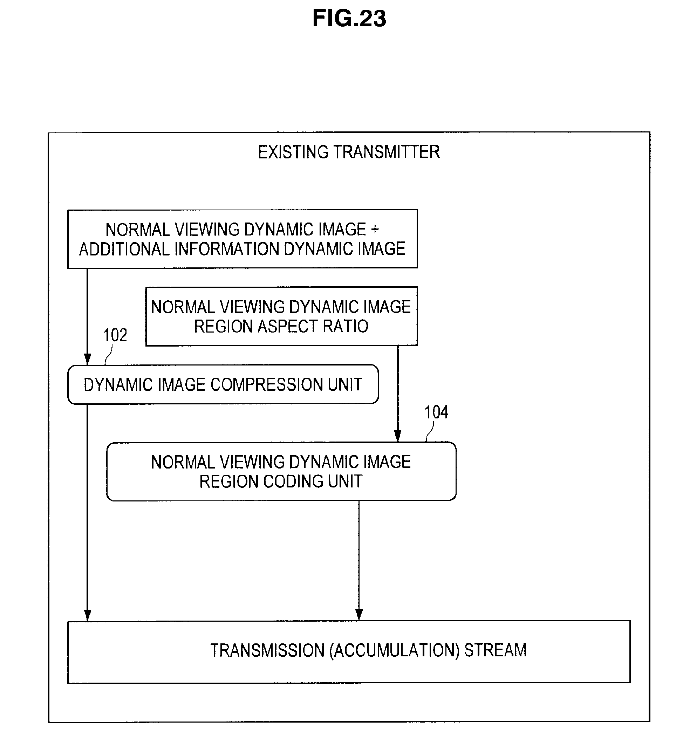

Fig. 22 is a block diagram showing a transmitter 100 according to the present embodiment. As shown in Fig. 22, the transmitter 100 includes a dynamic image compression unit 102, a normal viewing dynamic image region coding unit 104, and an additional information dynamic image presence information coding unit 106. An integrated dynamic image integrating a normal view dynamic image and an additional information dynamic image, the region and aspect ratio of the normal view dynamic image in the integrated dynamic image, the type and region (if there is no agreement between transmission and reception in advance) of the additional information dynamic image, and the region (if there is no agreement between transmission and reception in advance) of the normal view dynamic image in the integrated dynamic image when the additional information dynamic image is used are input into the transmitter 100 in Fig. 22 and a stream of encoded data of the above information is output therefrom. Fig. 23 shows an existing transmitter, which is different from the transmitter 100 in Fig. 22 in that the existing transmitter does not include the coding information dynamic image presence information coding unit 106. The configuration shown in Fig. 22 or Fig. 23 can be created by hardware such as circuits or a central processing unit (CPU) and a program (software) to cause the CPU to function. This also applies to the receiver.

### <Compression of an integrated dynamic image and region coding of a normal viewing dynamic image>

In the present embodiment, an integrated dynamic image arranged as shown in Fig, 1 is compressed by an existing codec in the dynamic image compression unit 102. Further, the sample aspect ratio and information (upper left endpoint, width/height) indicating the region of the normal viewing dynamic image of the arrangement information in Fig. 2 are encoded by the normal viewing dynamic image region coding unit 104 by using a coding method of an existing codec.

First, if the codec of dynamic images conforms to, for example, H.264, the sample aspect ratio of the normal viewing dynamic image is specified by using aspect_ratio_idc, sar_width, sar_height inside VUI (Video usability information) in the SPS.

There is a plurality of sample aspect ratios in Fig. 2 and the sample aspect ratio of a normal viewing dynamic image is used in such a way that the normal viewing dynamic image is displayed in the correct length-to-width ratio. In the case of Fig. 2, the sample aspect ratio of the normal viewing dynamic image is 2:1 and so sar_width and sar_height need not be set and aspect_ratio_idc=16 may be set.

The information of the region of the normal viewing dynamic image is encoded as a cutout region of the normal viewing dynamic image in the integrated dynamic image. For example, if the codec of dynamic images conforms to H.264, the region is set as crop parameters that cut out the normal viewing dynamic image from the integrated dynamic image by using frame_crop_left_offset, frame_crop_right_offset, frame_crop_top_offset, and frame_crop_bottom_offset in the SPS (sequence parameter set).

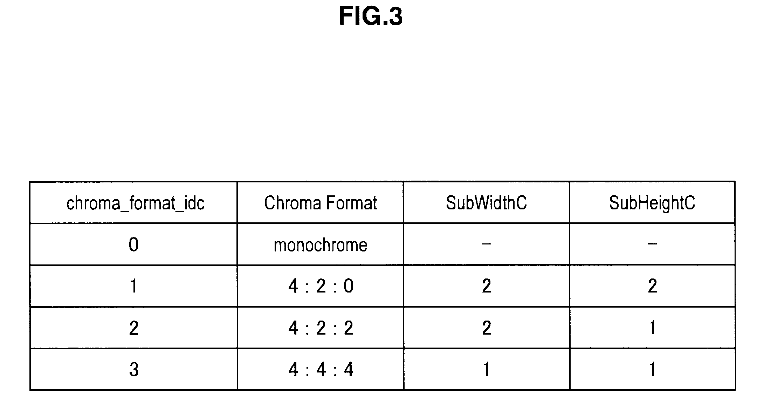

The crop parameters and a region cut out as a rectangular region have relationships shown below. Using SubWidthC and SubHeightC shown in Fig. 3, coordinates (xs, ys) of the upper left endpoint are given by
xs = SubWidthC * frame_crop_left_offset
ys = SubHeightC * (2-frame_mbs_only_flag) * frame_crop_top_offset

Coordinates (xe, ye) of the lower right endpoint are given by
xe = PicWidthInSamles - (SubWidthC * frame_crop_right_offset + 1)
ye = 16 * FrameHeightInMbs
- (SubHeightC * (2-frame_mbs_only_flag) * frame_crop_bottom_offset + 1)

chroma_format_idc and frame_mbs_only_flag are both parameters inside the SPS of H.264.

In the current broadcasting, chroma_format_idc is 1 and thus, SubWidthC = 2 and SubHeightC = 2. frame_mbs_only_flag is a flag indicating whether to perform dynamic image compression in frames or in fields.

Fig. 1 illustrates the arrangement in a frame and thus, compression in frames is assumed and the description will continue by setting frame_mbs_only_flag = 1. When compression is performed in fields, frame_mbs_only_flag = 0 may be set for calculation and the present embodiment is also valid when compression is performed in fields.

From the above, xs, xe, ys, and ye are given by
xs = 2 * frame_crop_left_offset
ys = 2 * frame_crop_top_offset
xe = PicWidthInSamles
- (2 * frame_crop_right_offset + 1)
ye = 16 * FrameHeightInMbs
- (2 * frame_crop_bottom_offset + 1)
Accordingly, the cut-out image has a width w and a height h given by
w = PicWidthInSamles - 2 * frame_crop_left_offset - 2 * frame_crop_right_offset
h = 16 * FrameHeightInMbs - 2 * frame_crop_top_offset - 2 * frame_crop_bottom_offset

Parameters to cut out the normal viewing dynamic image in Fig. 1 are determined as PicWidthInSamples = 1920 from the width of the integrated dynamic image and 16 * FrameHeightInMbs = 1088 because the height of the integrated dynamic image is 1080 and is not a multiple of 16.

Further, from xs = 0, ys = 0, w = 960, h = 1080 of the normal viewing dynamic image, the following setting may be made:
frame_crop_left_offset = 0
frame_crop_top_offset = 0
frame_crop_right_offset = 480
frame_crop_bottom_offset = 8

If coding processing in H.264 is performed by specifying the sample aspect ratio and arrangement information of a normal viewing dynamic image as described above, the normal viewing dynamic image is cut out from the integrated dynamic image and displayed in the correct length-to-width ratio by decoding the encoded stream.

The above is encoding of the sample aspect ratio and arrangement information of a normal viewing dynamic image in H.264 and encoding can similarly be performed in MPEG2 VIDEO. Concerning the sample aspect ratio, aspect_ratio_information is in the sequence header and the parameter can be set by the sample aspect ratio or the display aspect ratio.

The sample aspect ratio indicates the length-to-width ratio of a pixel immediately after decompression and the display aspect ratio indicates the length-to-width ratio in the display.

The sample aspect ratio of the normal viewing dynamic image in Fig. 2 is 2:1, which indicates that the width of a pixel is double the height. Thus, an image of 960 x 1080 is expanded two-fold in the horizontal direction to display the image at 1920 x 1080. The display aspect ratio is the length-to-width ratio of 1920 x 1080 of the display and thus, 1920:1080 = 16:9 is obtained. This 16:9 can be specified by setting aspect_ratio_information = 3.

Regarding the region cutout, on the other hand, the width/height to be cut out can be specified by display_vertical_size and display_horizontal_size in the sequence display extension header. The offset between the center of a cutout portion and the center of an original image can be specified by frame_centre_horizontal_offset and frame_centre_vertical_offset in the picture display extension header. Using these parameters, the sample aspect ratio and arrangement information of a normal viewing dynamic image can be encoded. However, in the description of ITU-T. Rec. H.262, these parameters are described in parallel with the pan-scan and may not be freely settable depending on broadcasting regulations. Concerning H.264, the crop parameters can be set separately from the pan-scan and there is no restriction the parameters related to the pan-scan.

If another codec has parameters to cut out a dynamic image after decompression, such parameters can be used to specify the sample aspect ratio and arrangement information of a normal viewing dynamic image in the present invention.

Next, additional information dynamic image presence information to be encoded by the additional information dynamic image presence information coding unit 106 of the transmitter 100 shown in Fig. 22 will be described.

### <Additional information dynamic image presence information>

In the example in Fig. 1, in addition to the normal viewing dynamic image, two additional information dynamic images, additional information dynamic images 1, 2 are transmitted. These additional information dynamic images are effective dynamic images as supplementary dynamic images for a program, but may be considered to be dynamic images displayed in accordance with user's preferences, rather than at all times.

In the example in Fig. 1, for the green in the main screen, a dynamic image showing undulations of the green from the same angle and a dynamic image taking a survey of the entire hole from the sky are transmitted by being arranged in an integrated dynamic image as supplementary dynamic images.

Additional information dynamic image presence information is information indicating "whether these supplementary dynamic images are present", "if present, what are the width/height, position, and sample aspect ratio?", "further, when these supplementary dynamic images are used, what about the cutout region of the normal viewing dynamic image?".

In the example of Figs. 1 and 2, the width, height, and sample aspect ratio of the additional information dynamic image are different from those of the normal viewing dynamic image.

It is assumed here that the width, height, and sample aspect ratio of the additional information dynamic image and the cutout region of the normal viewing dynamic image when the additional information dynamic image is used are not agreed on between a transmitter and a receiver in advance.

### <When additional information dynamic image presence information is transmitted as SEI of the H.264 standard>

In the H.264 standard, the description method of supplemental information called Supplemental enhancement information (SEI) is defined. In SEI, information such as the holding time of data in an input/output buffer for decoding and the presentation of points for decoding during random access is described.

In the present embodiment, an example in which additional information dynamic image presence information in the present embodiment is made transmittable by newly adding additional information dynamic image SEI.

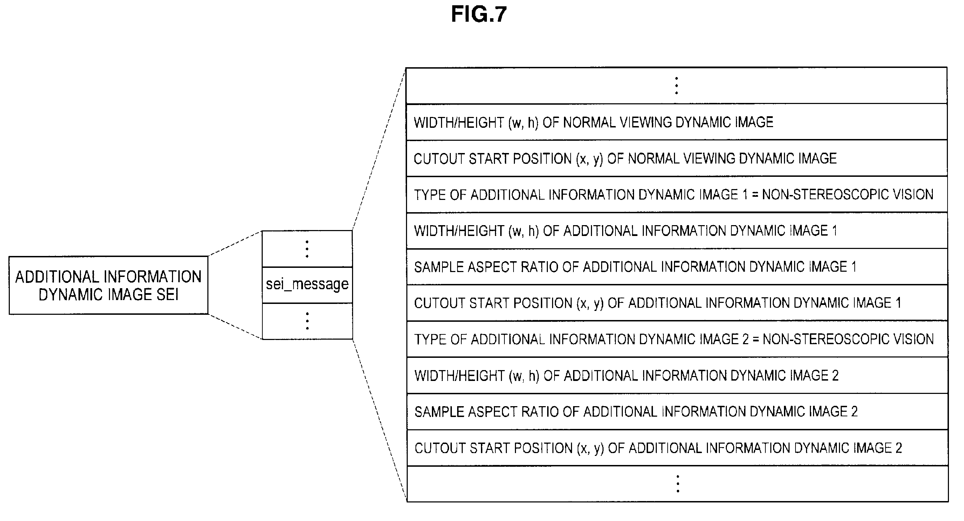

Fig. 7 shows a hierarchy of the additional information dynamic image SEI and the cutout start position, width, and height of the normal viewing dynamic image when an additional information dynamic image is used, the type of additional information dynamic image, the number of additional information dynamic images, the cutout start positions, widths/heights, and sample aspect ratios of various additional information dynamic images are specified as sei_message of SEI.

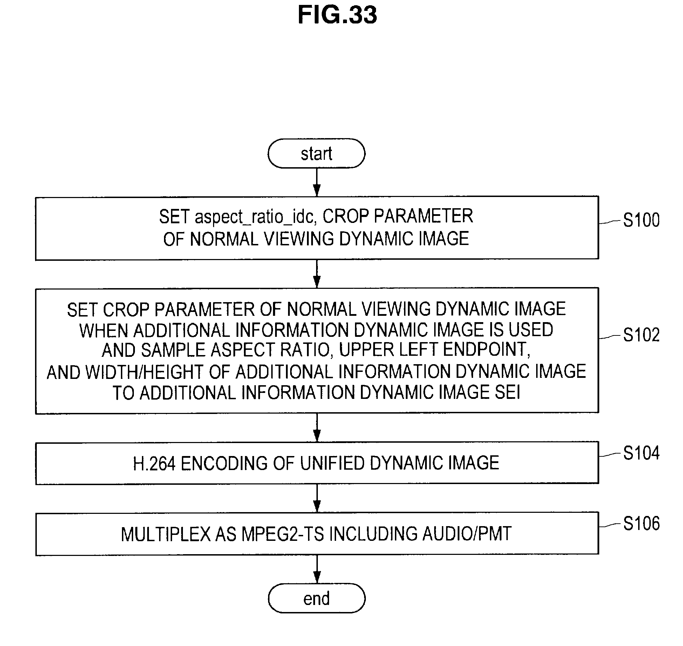

The SEI newly added in the present embodiment is created grammatically according to grammatical rules of H.264. Thus, it is difficult for an existing transmitter to decode SEI, but can perform the next processing by skipping the SEI. Fig. 33 shows a processing flow chart of the transmitter 100 when H.264 is used as an encoder and the additional information dynamic image SEI is used. First, crop parameters and aspect_ratio_idc (sar_width and sar_height are also used if necessary) of H.264 calculated from the position, width, and height of the normal viewing dynamic image in the integrated dynamic image are set to the encoder (step S100).

Next, the cutout start position, width, and height of the normal viewing dynamic image when the additional information dynamic image is used, the type of additional information dynamic image, the sample aspect ratio, and the cutout start position, width, and height of the additional information dynamic image determined from the upper left endpoint and width/height are set to the encoder as additional information dynamic image SEI (step S102). Further, encoder settings such as the image size of the integrated dynamic image are made and then, the integrated dynamic image is encoded (step S104). For transmission by a digital broadcasting system, a transmission stream can be obtained by multiplexing based on MPEG2-TS (step S106).

In Fig. 7, the arrangement of the normal viewing dynamic image and additional information dynamic image is specified by the cutout start position, width, and height, but the arrangement may also be specified by other methods such as the method of specifying the crop region in H.264.

The SEI is a transmission description defined by the H.264 standard and any codec having a means for transmitting supplementary information to dynamic image compression/decompression processing such as using, for example, USER_DATA for MPEG2 video can be adapted by adding a description to newly transmit supplementary information.

It is difficult for an existing transmitter (on sale on the market or sold) to decode newly added additional information dynamic image SEI, but can continue processing by skipping the SEI. It is assumed here that reception processing is performed by an existing receiver by skipping the additional information dynamic image SEI.

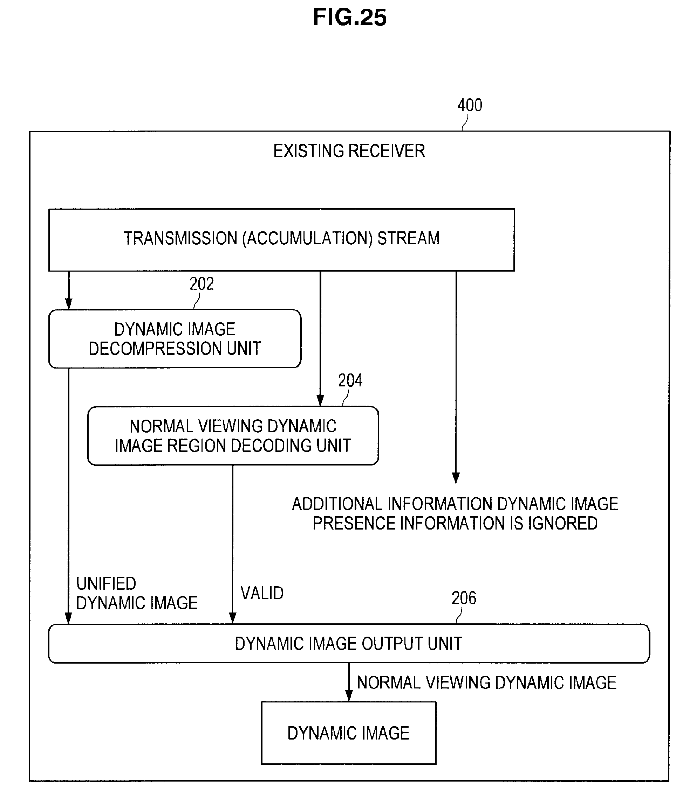

Fig. 25 is a schematic diagram showing an existing receiver 400. Coding of an integrated dynamic image combining a normal viewing dynamic image and additional information dynamic image and coding of the region of the normal viewing dynamic image are the same processing as that performed by an existing transmitter. Thus, as shown in Fig. 25, even the existing receiver 400 decodes the integrated dynamic image and the normal viewing dynamic image is cut out and displayed in a dynamic image output unit 206 as expected based on the crop information described above.

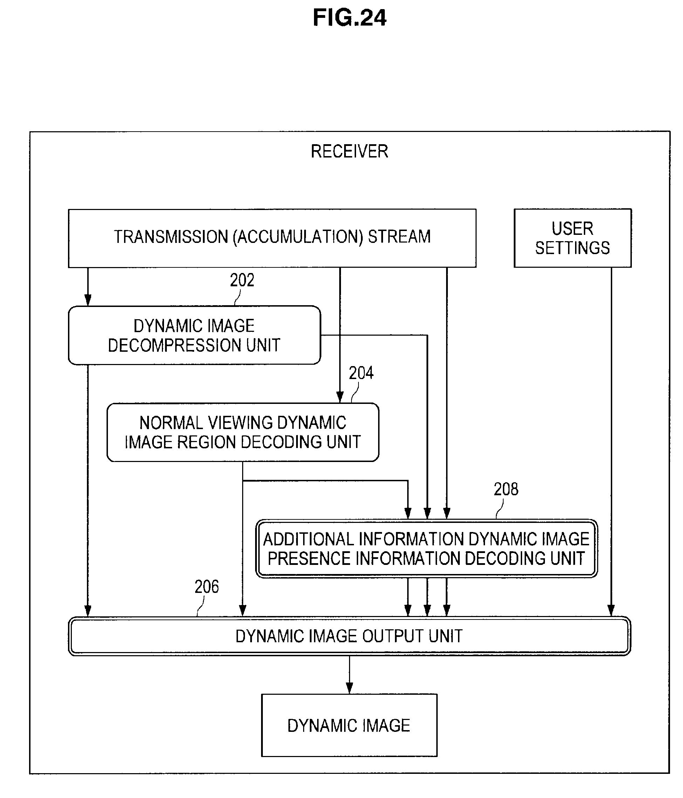

On the other hand, Fig. 24 is a schematic diagram showing a receiver 200 according to the present embodiment. The receiver 200 according to the present embodiment includes a dynamic image decompression unit 202, a normal viewing dynamic image region decoding unit 204, an additional information dynamic image presence information decoding unit 208, and a dynamic image output unit (display panel) 206. In the receiver 200 according to the present embodiment, additional information dynamic image SEI can be decoded by the additional information dynamic image presence information decoding unit 208. Thus, the receiver 200 recognizes the presence of an additional information dynamic image outside the region of the normal viewing dynamic image and can obtain the cutout start position, width, and height of the normal viewing dynamic image when an additional information dynamic image is used, the number of additional information dynamic images, and the cutout start position, width, height, and sample aspect ratio of each additional information dynamic image.

### <When additional information dynamic image presence information is transmitted as a descriptor of PMT>

In MPEG2-TS, the PMT (Program map table) is defined as PSI (Program System Information) that describes stream information of a program to be transmitted.

Stream information of PMT contains the PID (Packet ID) to select audio or video packets, stream_type, and descriptor so that what is used by the video codec or audio codec for coding can be known.

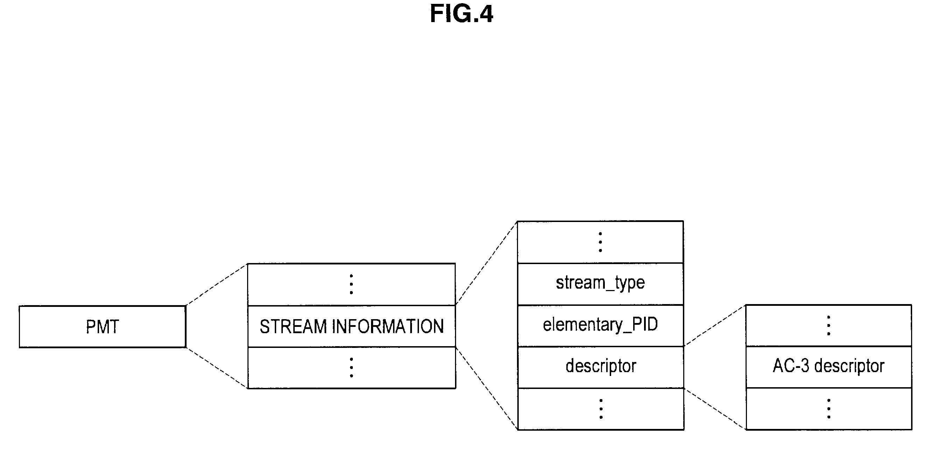

Fig. 4 shows stream information of Dolby's AC-3 audio. stream_type of AC-3 is not defined in ITU-T REC. H.222.0 and stream_type of PES private data is used in Europe and stream_type of User private is used in the USA.

Thus, it is difficult to determine whether the packet of PID specified by elementary_PID is an audio stream from stream_type in Fig. 4 alone. Thus, AC-3 provides an AC-3 descriptor as a descriptor of PMT and whether an AC-3 stream can be judged by detecting this descriptor. Thus, the PMT provides a usage method of setting information on the codec of programs through the descriptor.

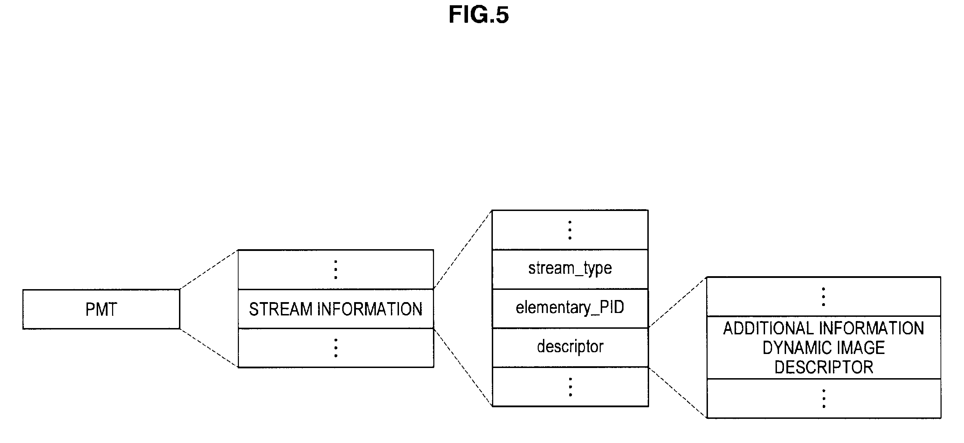

Also in the present embodiment, based on the usage method, an example of transmitting additional information dynamic image presence information by adding the descriptor to the PMT will be described. Fig. 5 shows a case when an additional information dynamic image descriptor is added to the stream information of PMT. The additional information dynamic image descriptor notifies that an integrated dynamic image is compressed and an additional information dynamic image is present in a packet having the PID specified by elementary_PID and also makes a notification of parameters to use the additional information dynamic image.

If the integrated dynamic image is compressed by H.264, 0 x 1B is set as stream_type and if the integrated dynamic image is compressed by MPEG2, 0 x 2 is set as stream_type. The additional information dynamic image descriptor itself is independent of the codec and the same additional information dynamic image descriptor can be used for MPEG2 and H.264. Needless to say, it is difficult for the existing receiver 400 to interpret the additional information dynamic image descriptor and normally operates by ignoring the descriptor.

However, if the regions of the integrated dynamic image and the normal viewing dynamic image and the sample aspect ratio are set by conforming to the present embodiment, the integrated dynamic image can also be decoded by the existing receiver 400 and the normal viewing dynamic image is cut out therefrom so that the normal viewing dynamic image can be displayed correctly.

In the receiver 200 according to the present embodiment, on the other hand, the additional information dynamic image descriptor can be decoded and interpreted by the additional information dynamic image presence information decoding unit 208. Thus, the presence of an additional information dynamic image outside the region of the normal viewing dynamic image can be recognized.

In the present embodiment, it is assumed that the cutout region of the normal viewing dynamic image when an additional information dynamic image is used and the width/height and sample aspect ratio of the additional information dynamic image are not agreed on between a transmitter and a receiver in advance and thus, these parameters are stored in the additional information dynamic image descriptor and transmitted.

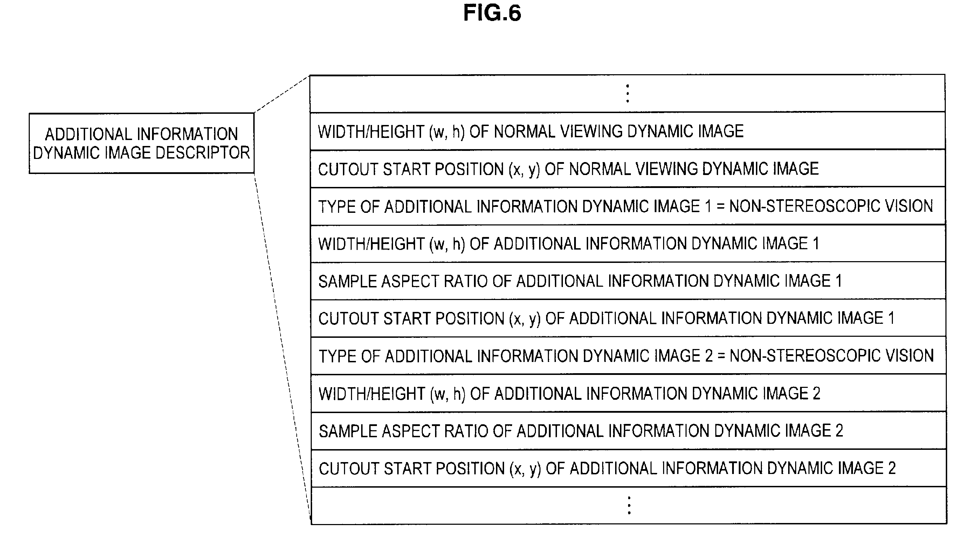

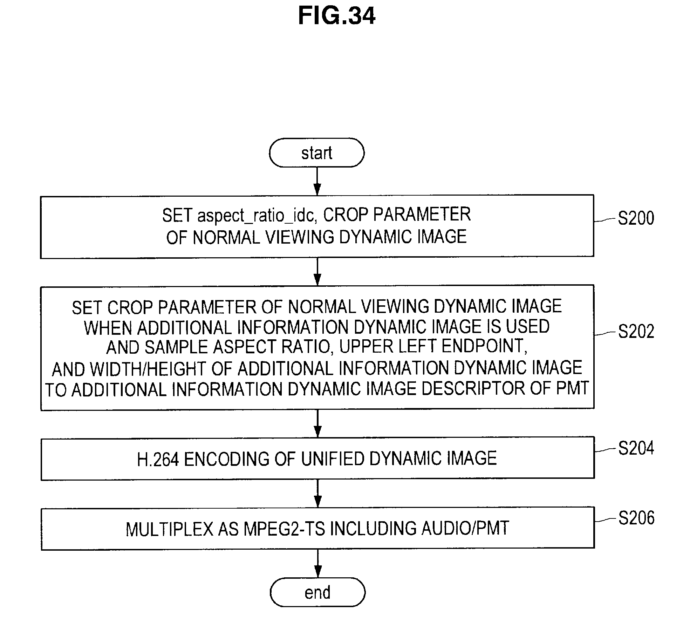

Fig. 6 shows a content example of the additional information dynamic image descriptor. Fig. 34 shows a processing flow chart of the transmitter when H.264 is used as an encoder and the additional information dynamic image descriptor is used. First, crop parameters and aspect_ratio_idc (sar_width and sar_height are also used if necessary) of H.264 calculated from the position, width, and height of the normal viewing dynamic image in the integrated dynamic image are set to the encoder (step S200). Next, the cutout start position, width, and height of the normal viewing dynamic image when an additional information dynamic image is used, the type of additional information dynamic image, the sample aspect ratio, and the cutout start position, width, and height of the additional information dynamic image determined from the upper left endpoint and width/height are prepared as the additional information dynamic image descriptor in Fig. 6 (step S202). Further, encoder settings such as the image size of the integrated dynamic image are made and then, the integrated dynamic image is encoded (step S204). A transmission stream can be obtained by setting the prepared additional information dynamic image descriptor to PMT for MPEG2-TS multiplexing necessary for transmission by a digital broadcasting system (step S206).

In the example in Fig. 2, two additional information dynamic images present in addition to the normal viewing dynamic image are both non-stereoscopic vision additional information dynamic images and thus, the type of additional information dynamic images is set as non-stereoscopic vision and after the cutout start position, width, and height of the normal viewing dynamic image when an additional information dynamic image is used, the type of additional information dynamic images, the number of additional information dynamic images, and the cutout start position, width, height, and sample aspect ratio of each additional information dynamic image are successively specified.

Here, the start position and width/height are used to specify the region of the normal viewing dynamic image and additional information dynamic images, but its purpose is to specify the arrangement inside the integrated dynamic image and thus, the region may be specified by a method similar to the method of specifying crop parameters in H.264 or any other method.

In addition to the format of the additional information dynamic image descriptor in Fig. 6, the field of the type of additional information dynamic image in the descriptor can be omitted by preparing a descriptor for each type of the additional information dynamic image as the non-stereoscopic vision additional information dynamic image descriptor. In addition, the field of the number of additional information dynamic images can be omitted by preparing a descriptor for each of the additional information dynamic image 1 and the additional information dynamic image 2 and describing a plurality of additional information dynamic image descriptors in stream information of PMT.

The present invention is valid also for MPEG2-PS and like when a new additional information dynamic image descriptor is added to PMT of MPEG2-TS, a valid operation is achieved by adding a new descriptor storing additional information dynamic image presence information to the Program stream map (PSM).

For any container other than MPEG2 for which supplementary information to video data can be described and to which the supplementary information can be added, the supplementary information can be applied like the above addition of the descriptor.

### <When additional information dynamic image presence information is transmitted as private section>

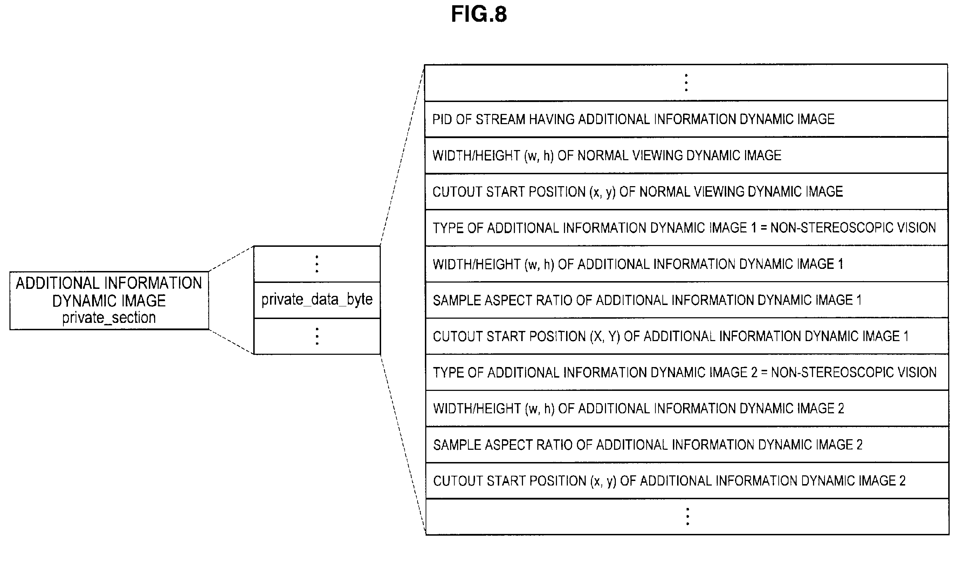

In MPEG2-TS, section data can be transmitted to the same layer as that of PMT. Private section is considered by assuming a case of new addition to the section and transmitting additional information dynamic image presence information in the present embodiment as a new private section can be considered. Fig. 8 shows a case when additional information dynamic image presence information is transmitted as the new private section.

It is difficult for the existing receiver 400 to decode the new section and, like the descriptor of PMT, is skipped by the existing receiver 400.

Fig. 8 shows a case when after the PID to judge the packet of the integrated dynamic image in Fig. 2 and the cutout start position, width, and height of the normal viewing dynamic image when an additional information dynamic image is used, the type of additional information dynamic image, and the cutout start position, width, height, and sample aspect ratio of the additional information dynamic image are successively specified.

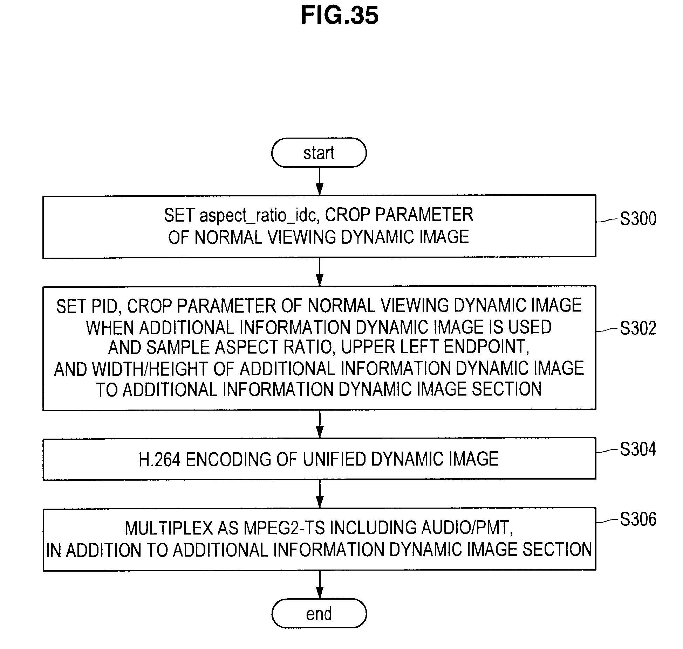

Fig. 35 shows a flow chart of the transmitter when H.264 is used as an encoder and an additional information dynamic image section is used. First, crop parameters and aspect_ratio_idc (sar_width and sar_height are also used if necessary) of H.264 calculated from the position, width, and height of the normal viewing dynamic image in the integrated dynamic image are set to the encoder (step S300). Next, the PID to judge the packet, the cutout start position, width, and height of the normal viewing dynamic image when an additional information dynamic image is used, the type of additional information dynamic image, the sample aspect ratio, and the cutout start position, width, and height of the additional information dynamic image determined from the upper left endpoint and width/height are prepared as the additional information dynamic image section in Fig. 6 (step S302). Further, encoder settings such as the image size of the integrated dynamic image are made and then, the integrated dynamic image is encoded (step S304). A transmission stream can be obtained by multiplexing also the prepared additional information dynamic image section for MPEG2-TS multiplexing necessary for transmission by a digital broadcasting system (step S306).

Here, the regions of the normal viewing dynamic image and additional information dynamic image are specified, but its purpose is to determine the arrangement inside the integrated dynamic image and thus, the arrangement may also be specified by other methods such as the method of specifying the crop region in H.264.

The type of additional information dynamic image can be omitted by adding a new private section for each type of the additional information dynamic image.

By using one of three storage methods of additional information dynamic image presence information described above, additional information dynamic image presence information is encoded by the additional information dynamic image presence information coding unit 106 of the transmitter 100 in the present embodiment.

From the foregoing, a stream that encodes an integrated dynamic image, a normal viewing dynamic image, the cutout region of the normal viewing dynamic image when an additional information dynamic image is used, the sample aspect ratio, and additional information dynamic image presence information can be obtained.

When the video codec conforms to H.264, if a stream thereof is obtained and the stream is decoded by the existing receiver 400 satisfying the H.264 standard (ITU-T Rec. H.264), additional information dynamic image presence information is ignored and the normal viewing dynamic image is displayed. This also applies when the video codec conforms to MPEG2 VIDEO (ITU-T Rec. H.262).

On the other hand, the receiver 200 to which the present embodiment is applied decodes also additional information dynamic image presence information and the user enjoys more services than services provided by the existing receiver 400.

Thus, according to the present embodiment, new functions can be added while maintaining compatibility with existing TV sets and, compared with a case when it becomes necessary to purchase a new TV set for viewing or dynamic images cause an uncomfortable feeling, advantages for the user are greater.

### <User interaction with the receiver>

When a program with additional information dynamic images is received by the receiver 200 in the present embodiment, the user can select from at least three types of display by setting or instructing the receiver 200:
1) Displaying the normal viewing dynamic image normally
2) Displaying the normal viewing dynamic image and additional information dynamic images simultaneously in the screen
3) Displaying the additional information dynamic images only in the screen

When the normal viewing dynamic image and additional information dynamic images are displayed simultaneously in the screen, the number of additional information dynamic images to be displayed or the arrangement or size thereof in the screen may be changed according to user requests.

Here, the receiver 200 is set how to display a program with additional information dynamic images in advance by operating a remote controller or the like. The receiver 200 is instructed to immediately change the display method of a program with additional information dynamic images based on user's instructions.

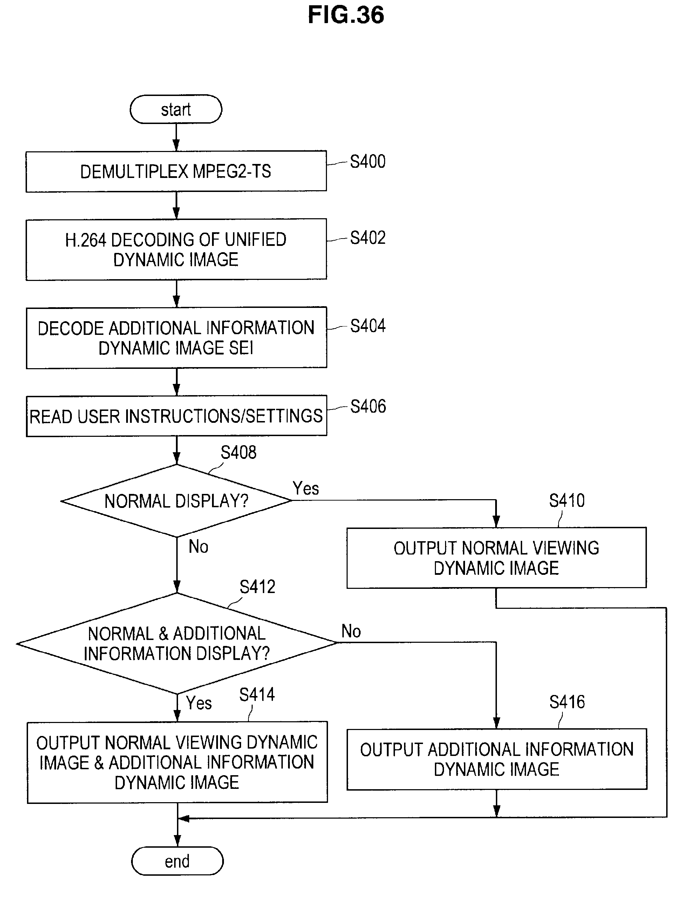

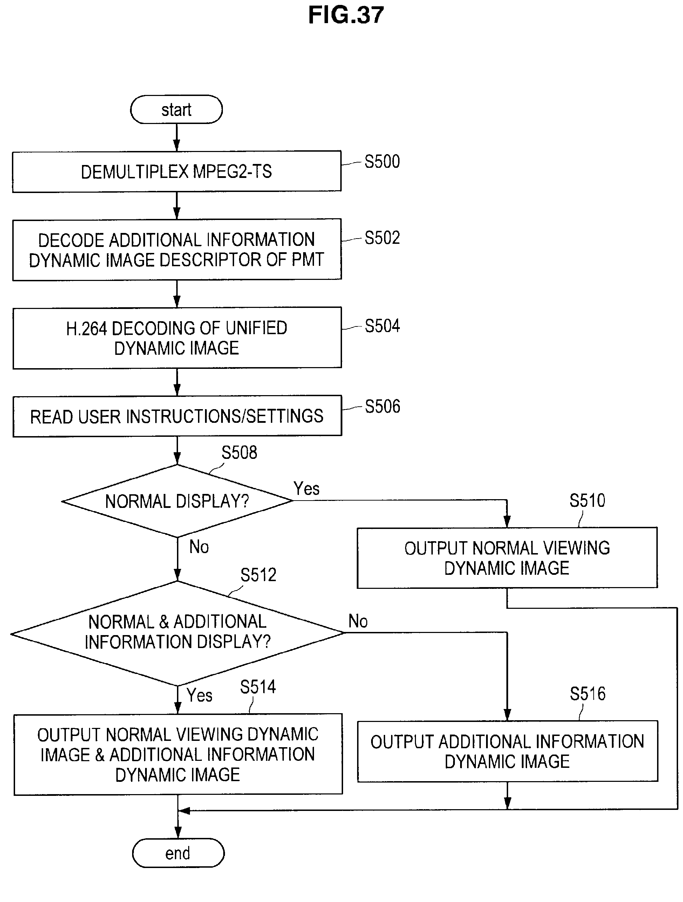

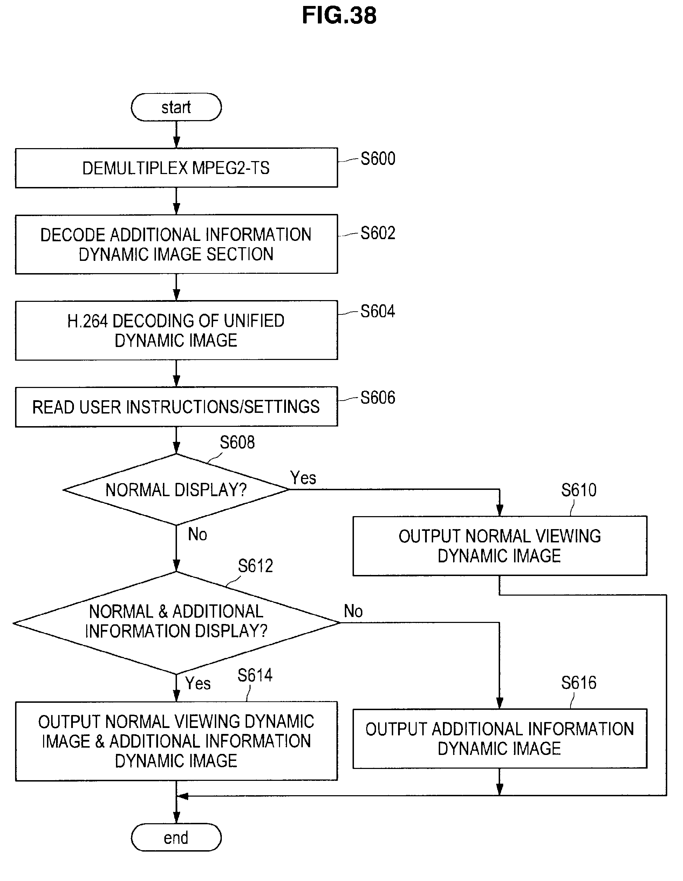

Figs. 36, 37, and 38 show flow charts of the receiver 200 when additional information dynamic image SEI to be added to H.264, an additional information dynamic image descriptor to be added to PMT descriptor, and an additional information dynamic image section to be added to MPEG2-TS are used respectively. In these flow charts, information of the SEI, descriptor, or section is decoded to determine whether there is any additional information dynamic image and, if there is an additional information dynamic image, parameters of the normal viewing dynamic image when the additional information dynamic image is used and the additional information dynamic image are received. A difference among Figs. 36, 37, and 38 is whether parameters are obtained by decoding PSI/SI during demultiplexing in MPEG2-TS (Figs. 37 and 38) or parameters are obtained as a result of decoding in H.264 (Fig. 36). After parameters are received, user settings of the receiver are read to change the output of dynamic images depending on whether to make a normal display, use additional information dynamic images for the display, or display both. If the normal display is set by user settings, the normal viewing dynamic image is output (steps S410, S510, S610). If the normal viewing dynamic image and additional information dynamic image are to be output by user settings, the normal viewing dynamic image and additional information dynamic image are output (steps S414, S514, S614). If the normal viewing dynamic image and additional information dynamic image are not to be output by user settings, the additional information dynamic image is output (steps S416, S516, S616).

In the present embodiment, dynamic images in which an additional information dynamic image is relatively related to a normal viewing dynamic image are illustrated, but the present embodiment operates validly even if dynamic images are not specifically related.

### [2. Second Embodiment]

Multi-eye stereoscopic vision content of a mountain scene is taken as an example to describe a case when the following information is agreed on between transmission and reception for transmission of dynamic images used for multi-eye stereoscopic vision as additional information dynamic images. If no agreement is made, the information may be transmitted like in the "first embodiment".
· Cutout region of the normal viewing dynamic image when an additional information dynamic image is used
· Position of the additional information dynamic image
· Width/height of the additional information dynamic image
· Sample aspect ratio of the additional information dynamic image

### 1. Double-Eye Stereoscopic Vision Dynamic Image

Here, a case when a left-eye dynamic image of a double-eye stereoscopic vision dynamic image of multi-eye stereoscopic vision is transmitted as a normal viewing dynamic image (first image) and a right-eye dynamic image as an additional information dynamic image (second image) is considered.

First, regarding dynamic image compression of an integrated dynamic image and encoding of the normal viewing dynamic image region and sample aspect ratio, methods described in the first embodiment can directly be applied.

Regarding additional information dynamic image presence information, first the agreement made between the transmitting side the receiving side is considered. The normal viewing dynamic image and the additional information dynamic image are a pair of a double-eye stereoscopic vision dynamic image and can be considered to have the same properties as dynamic images so that appropriating parameters of the normal viewing dynamic image to parameters of the additional information dynamic image is a natural agreement.

That is, the following agreement is assumed here:
(1) The normal viewing dynamic image and the additional information dynamic image have the same width and height as image sizes.
(2) The normal viewing dynamic image and the additional information dynamic image have the same sample aspect ratio.

In the present embodiment, when the double-eye stereoscopic vision is not implemented, the left-eye dynamic image is displayed. An agreement is assumed to be made that the displayed region and the region used for the left-eye dynamic image of double-eye stereoscopic vision are the same. That is,
(3) The cutout region of the normal viewing dynamic image when the additional information dynamic image is used and the cutout region of the normal viewing dynamic image when the additional information dynamic image is not used are the same is agreed on.

Next, the normal viewing dynamic image and the additional information dynamic image are arranged in one frame and determining the cutout start position of the additional information dynamic image from image size of a double-eye stereoscopic vision dynamic image is considered by assuming between transmission and reception that the additional information dynamic image is arranged below the normal viewing dynamic image.

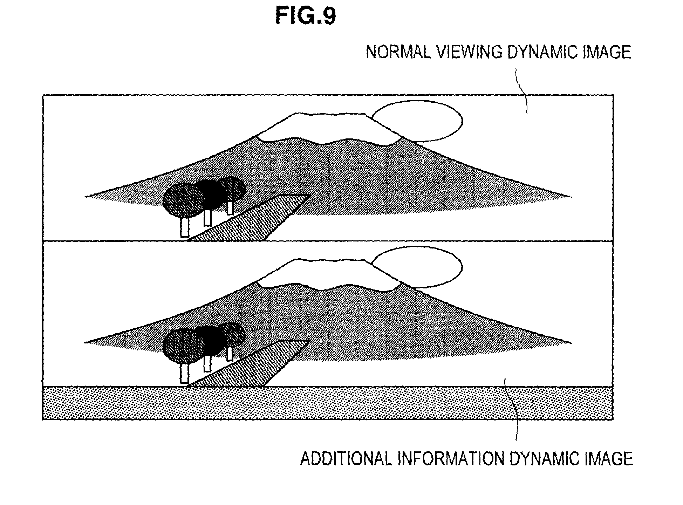

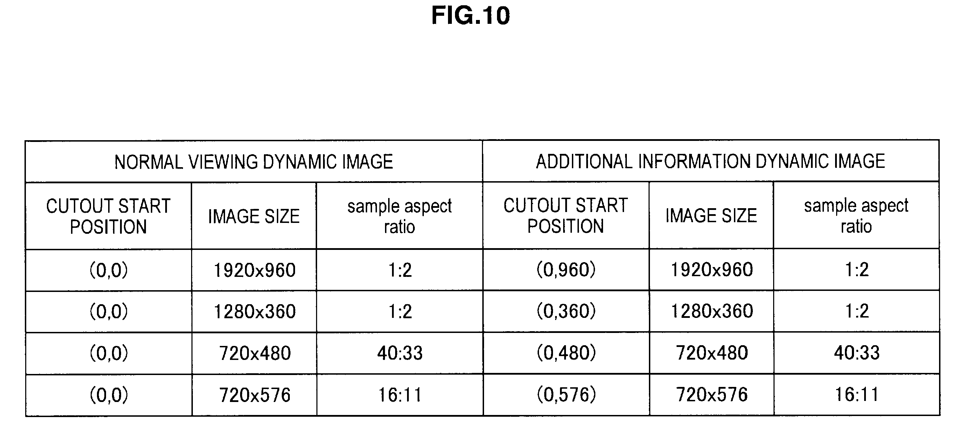

If the cutout position of the additional information dynamic image is arranged immediately after the normal viewing dynamic image, the arrangement looks as shown in Fig. 9 and agreement content looks as shown in Fig. 10.

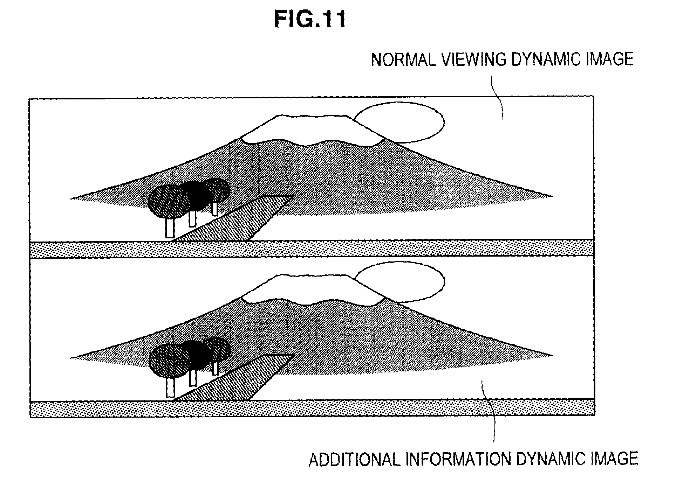

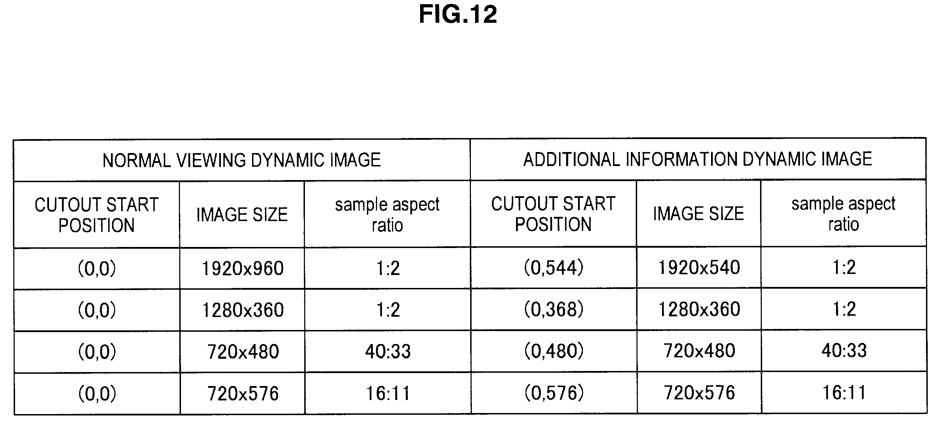

If encoding of the lower edge of the left-eye dynamic image and the upper edge of the right-eye dynamic image in the same macroblock is avoided, the right-eye dynamic image may be arranged, as shown in Fig. 11, spaced out with regard to the left-eye dynamic image and agreement content looks as shown in Fig. 12.

While only a portion of image sizes is shown in Figs. 10 and 12, sizes of images that may be transmitted can be agreed on as shown in Figs. 10 and 12 or an agreement can be made like calculation formulae shown below from crop parameters of the normal viewing dynamic image.

The cutout start position (xa, ya) of the additional information dynamic image in Fig. 9 starts immediately below the lowest edge line of the normal viewing dynamic image and can be calculated as follows:
xa = frame_crop_left_offset
ya = 16 * FrameHeightInMbs
-2 * frame_crop_bottom_offset
and the image size (w, h) of the additional information dynamic image is the same as that of the normal viewing dynamic image and can be calculated as follows:
w = PicWidthInSamles
-2 * frame_crop_left_offset
-2 * frame_crop_right_offset
h = 16 * FrameHeightInMbs
-2 * frame_crop_top_offset
-2 * frame_crop_bottom_offset

On the other hand, the cutout start position (xb, yb) of the additional information dynamic image in Fig. 10 can be calculated by using the cutout start position (xa, ya) in Fig. 9 as follows:
xb = xa
yb=ya+(16-ya%16)
(ya%16 denotes the remainder after dividing ya by 16)

Under these conditions,
(4) The determination method of the cutout start position of the additional information dynamic image in the integrated dynamic image is based on, for example, the table in Fig. 12 and if an image size is not contained in the table, an image size whose height is higher than that of the image size and closest thereto is used.
is agreed on.

Based on the agreements in (1) to (4) described above, the following information is assumed to be agreed on between transmission and reception:
· Cutout region of the normal viewing dynamic image when an additional information dynamic image is used
· Position of the additional information dynamic image
· Width/height of the additional information dynamic image
· Sample aspect ratio of the additional information dynamic image

These agreements can be met by equipping the additional information dynamic image presence information decoding unit 208 in the receiver 200 with a function to determine the cutout start position and image size of an additional information dynamic image from the crop parameters of the normal viewing dynamic image and a function to output the sample aspect ratio of the normal viewing dynamic image as the sample aspect ratio of the additional information dynamic image.

Parameters to be passed are all agreed on in these agreements and required content of additional information dynamic image presence information to be transmitted from the transmitter side to the receiver side includes information about whether an additional information dynamic image is present and information (stereoscopic vision judgment information) indicating the normal viewing dynamic image and the additional information dynamic image are a pair of a double-eye stereoscopic vision dynamic image.

Thus, if a code that can define the type of an additional information dynamic image is transmitted and the code is detected on the receiving side, the additional information dynamic image is obtained based on (1) to (4) and used. Therefore, even conventional transmission information can be used as additional information dynamic image presence information.

A case when the present embodiment is applied to information described in the first embodiment such as
· SEI of H.264
   (USER_DATA if MPEG2 video)
·PMT descriptor of MPEG2-TS
   (PSM descriptor if MPEG2-PS)
·private section of MPEG2-TS
will be described below.

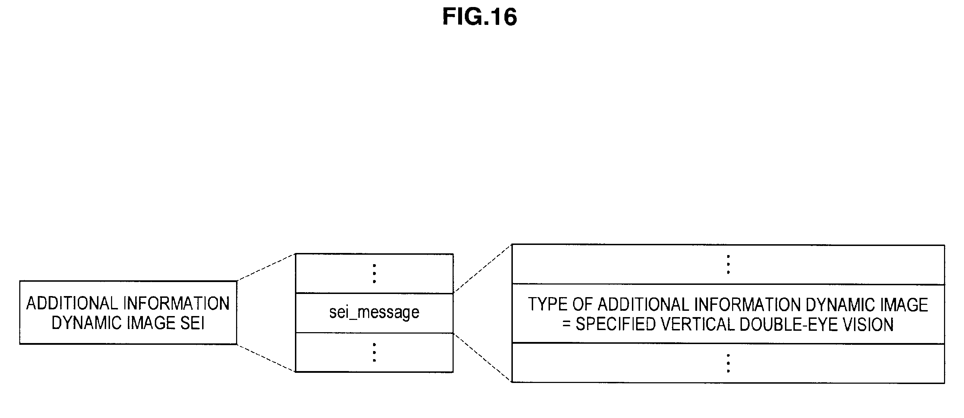

Fig. 16 shows content when additional information dynamic image SEI is newly added to H.264. Because the cutout region of the normal viewing dynamic image when the additional information dynamic image is used and the region and sample aspect ratio of the additional information dynamic image in the integrated dynamic image are agreed on between transmission and reception in advance, the minimum required information as sei_meesage is only that the type of additional information dynamic image is agreed vertical double-eye stereoscopic vision.
This is shown in Fig. 16 as the specified vertical double-eye stereoscopic vision. The type may be the specified double-eye stereoscopic vision, but there are horizontally arranged eyes, in addition to vertically arranged eyes, and "vertically" is added to the name to emphasize vertical arrangement.

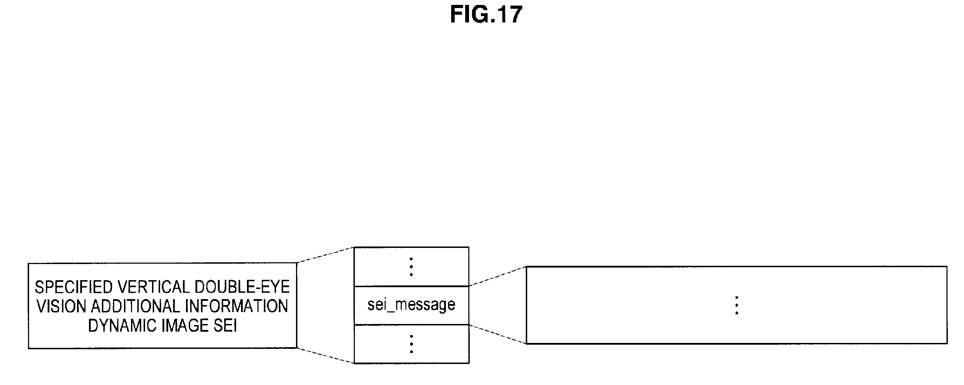

A case when one piece of SEI is newly added to H.264 looks as shown in Fig. 16, but if SEI is added for each type of the additional information dynamic image, there is no required item of information in sei_message as shown in Fig. 17 because, for example, with the presence of the specified vertical double-eye stereoscopic vision additional information dynamic image SEI, the integrated image can be determined to have a vertical double-eye stereoscopic vision additional information dynamic image. (Needless to say, other information can be contained.)

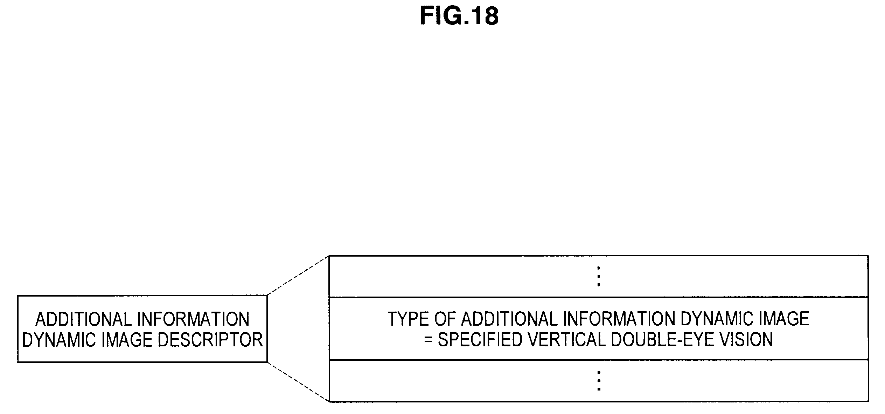

Next, Fig. 18 shows content when an additional information dynamic image descriptor is newly added to PMT.

Because the cutout region of the normal viewing dynamic image when the additional information dynamic image is used and the region and sample aspect ratio of the additional information dynamic image in the integrated dynamic image are agreed on between transmission and reception in advance, the minimum required information as descriptor is only that the type of additional information dynamic image is agreed vertical double-eye stereoscopic vision.

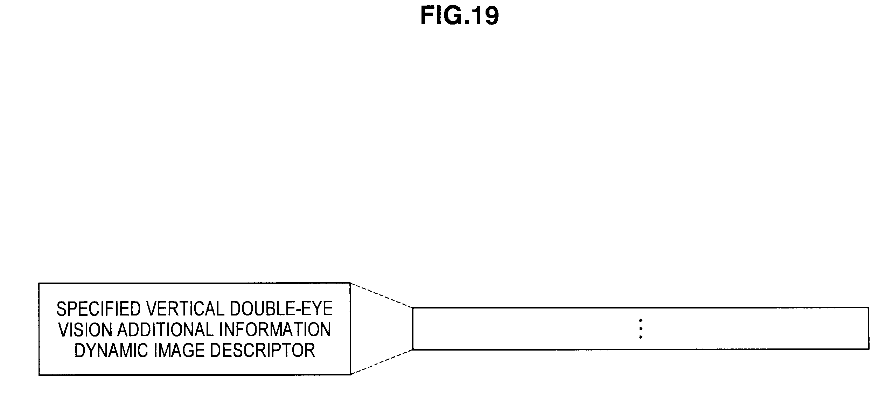

Also regarding the descriptor, as shown in Fig. 19, there is no information necessary for the operation of the present embodiment in the descriptor if the descriptor is prepared for each type of the additional information dynamic image.

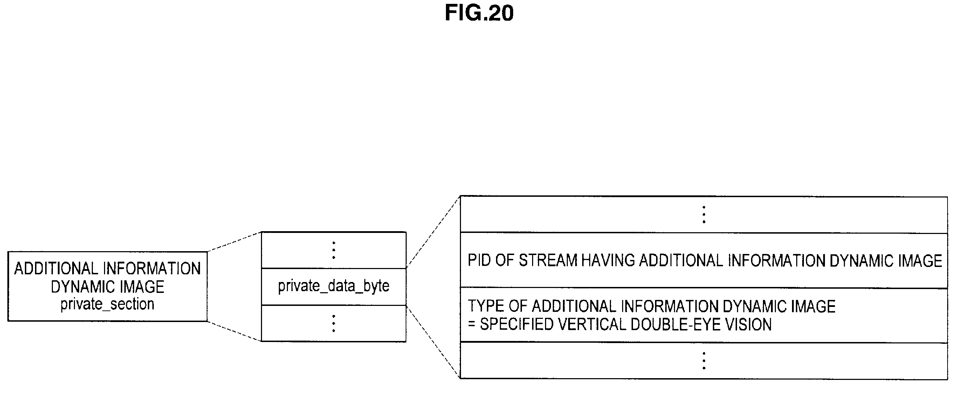

Fig. 20 shows content of private_data_byte when data that transmits additional information dynamic image presence information is added to private section of MPEG2-TS. Like the PMT descriptor, it is necessary to specify the type of additional information dynamic image and also to specify the PID of a stream having the additional information dynamic image.

Also regarding the private section, the type of additional information dynamic image can be omitted by adopting a method of newly adding a private section for each type of the additional information dynamic image.

From the foregoing, like in the first embodiment, a stream that encodes an integrated dynamic image, a region of a normal viewing dynamic image, the cutout region of the normal viewing dynamic image when an additional information dynamic image is used, the sample aspect ratio, and additional information dynamic image presence information can be obtained.

When the video codec conforms to H.264, if a stream thereof is obtained and the stream is decoded by the existing receiver 400 satisfying the H.264 standard (ITU-T Rec. H.264), additional information dynamic image presence information is ignored and the normal viewing dynamic image is displayed. This also applies when the video codec conforms to MPEG2 VIDEO (ITU-T Rec. H.262).

On the other hand, the receiver 200 to which the present embodiment is applied decodes also additional information dynamic image presence information correctly by the additional information dynamic image presence information decoding unit 208 so that, as shown below, the user enjoys more services than services provided by the existing receiver 400.

Thus, according to the present embodiment, new functions can be added while maintaining compatibility with existing TV sets and, compared with a case when it becomes necessary to purchase a new TV set to view or dynamic images cause an uncomfortable feeling, advantages for the user are greater.

Next, a case when images shown in Figs. 9 and 11 are displayed by the receiver 200 conforming to the present embodiment will be described. If the receiver is incapable of presenting double-eye stereoscopic vision, the crop parameters in the H.264 standard are used to cut out a normal viewing dynamic image from an integrated dynamic image and thus, the normal viewing dynamic image is basically presented to the user.

The receiver 200 using the present embodiment can determine the presence, arrangement, and sample aspect ratio of the additional information dynamic image so that the left-eye dynamic image, right-eye dynamic image, or both can be switched and displayed by providing a function for the user to instruct the display of the right-eye dynamic image of the additional information dynamic image, instead of the left-eye dynamic image of the normal viewing dynamic image.

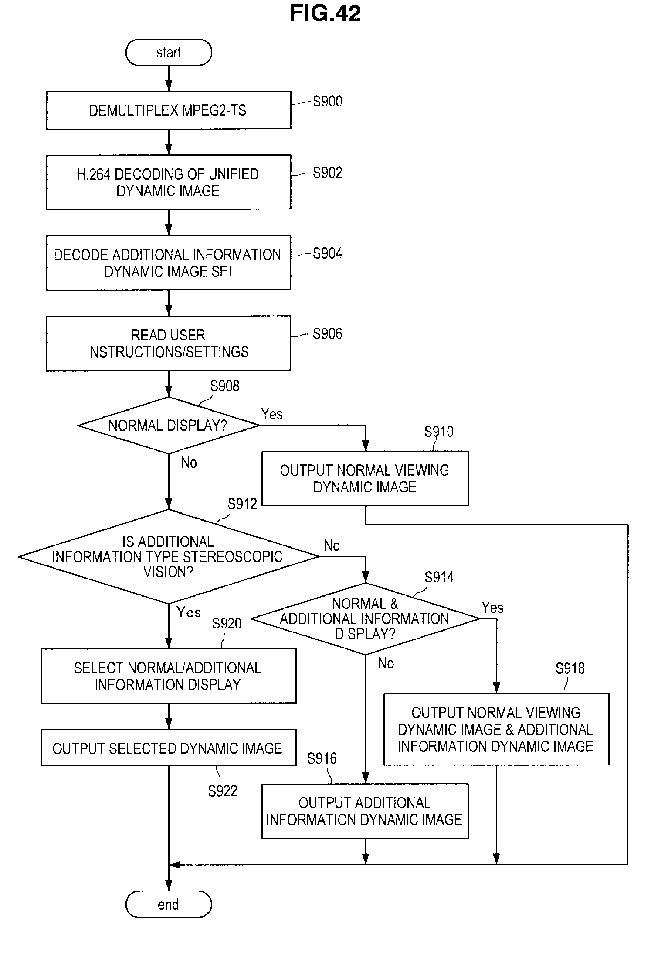

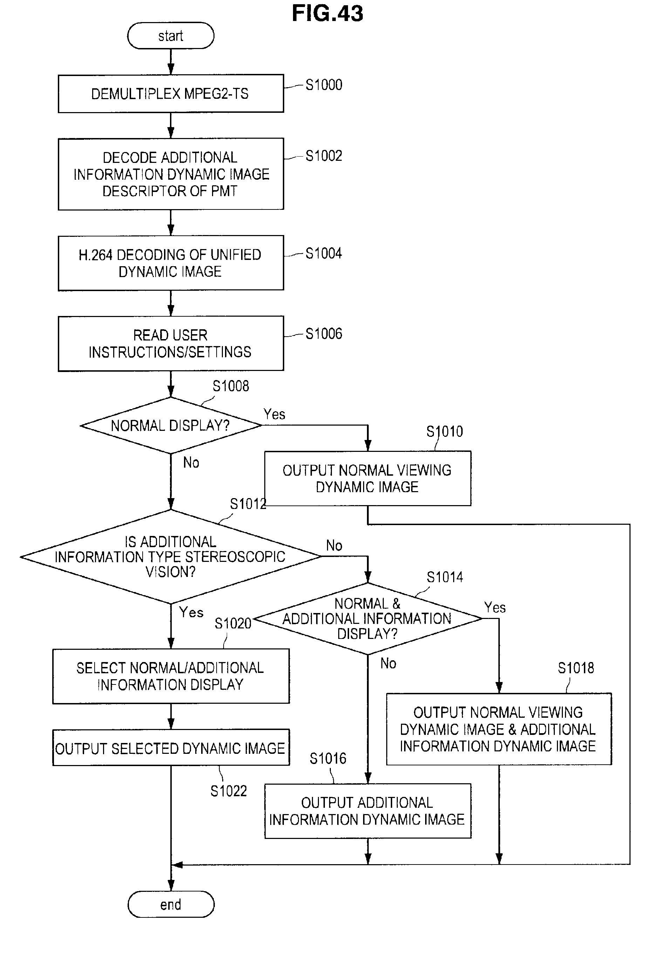

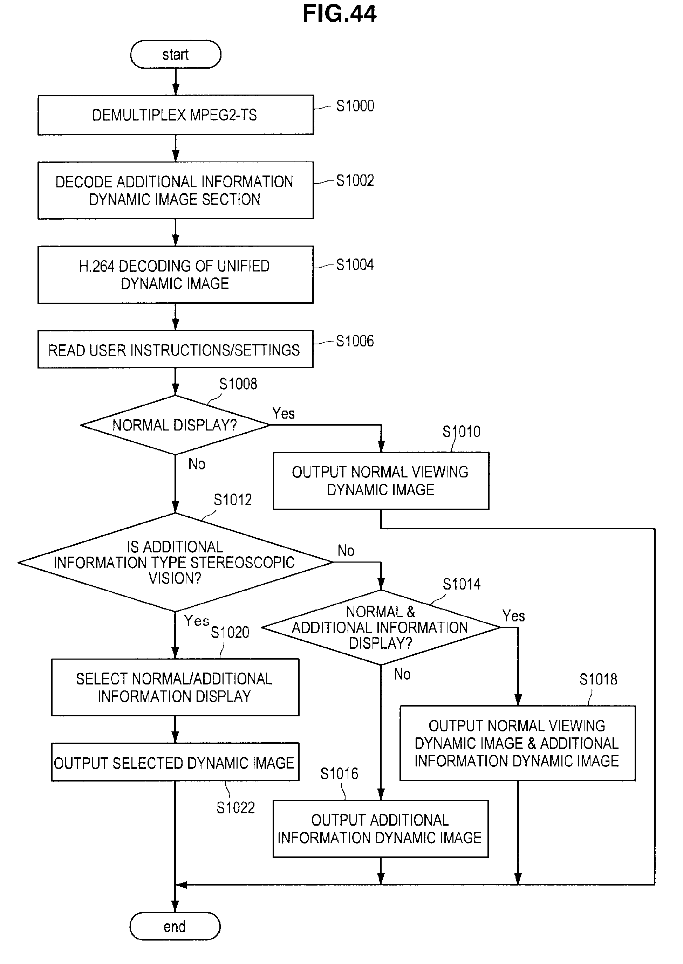

Figs. 42, 43, and 44 show flow charts of the receiver 200 when additional information dynamic image SEI to be added to H.264, an additional information dynamic image descriptor to be added to PMT descriptor, and an additional information dynamic image section to be added to MPEG2-TS are used respectively. In these flow charts, information of the SEI, descriptor, or section is decoded by the additional information dynamic image presence information decoding unit 208 to determine whether there is any additional information dynamic image in the integrated dynamic image and, if there is an additional information dynamic image, parameters of the normal viewing dynamic image when the additional information dynamic image is used and the additional information dynamic image are received. A difference among Figs. 42, 43, and 44 is whether parameters are obtained by decoding PSI/SI during demultiplexing in MPEG2-TS (Figs. 43 and 44) or parameters are obtained as a result of decoding in H.264 (Fig. 42). After parameters are received, user settings of the receiver are read to determine whether to make a normal display or use the additional information dynamic image for the display.

In the present embodiment, the type of additional information dynamic image is stereoscopic vision and so it is difficult for a receiver incapable of displaying stereoscopic vision to realize stereoscopic vision using the normal viewing dynamic image/additional information dynamic image. However, if the user does not select the normal viewing, the user can select the dynamic image to be displayed from the normal viewing dynamic image/additional information dynamic image and the normal viewing dynamic image or additional information dynamic image is cut out from the decoded integrated dynamic image depending on the selection and the dynamic image is output in accordance with user instructions/settings. As described above, the left-eye dynamic image, right-eye dynamic image, or both may be switched and displayed.

If the receiver is capable of presenting double-eye stereoscopic vision, double-eye stereoscopic vision can be presented by using the normal viewing dynamic image and additional information dynamic image. The user does not necessarily desire double-eye stereoscopic vision at all times and thus, instead of double-eye stereoscopic vision, the normal viewing dynamic image only and additional information dynamic image only can be displayed according to user instructions or settings.

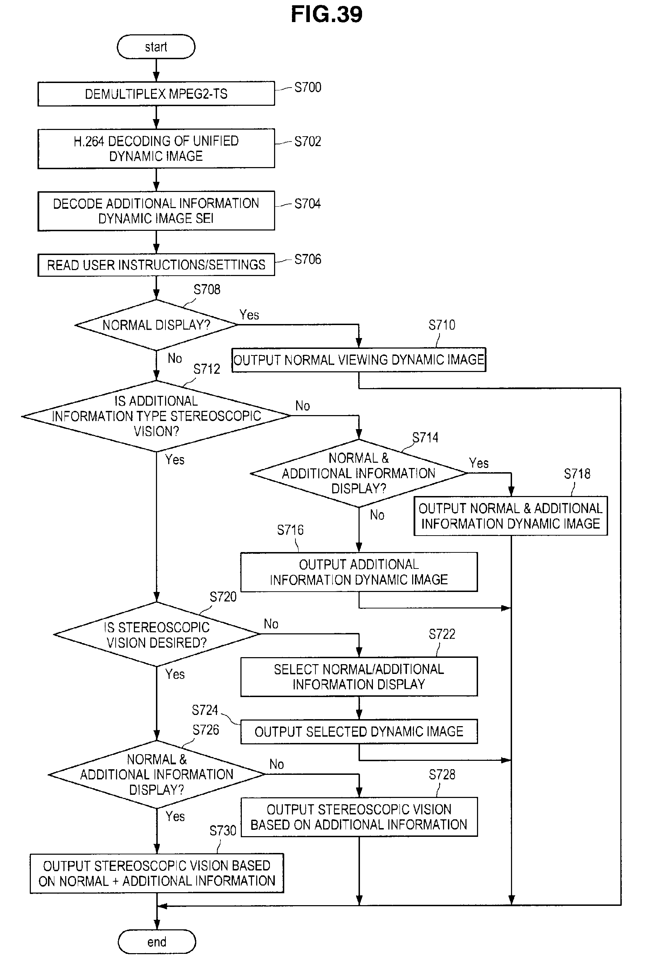

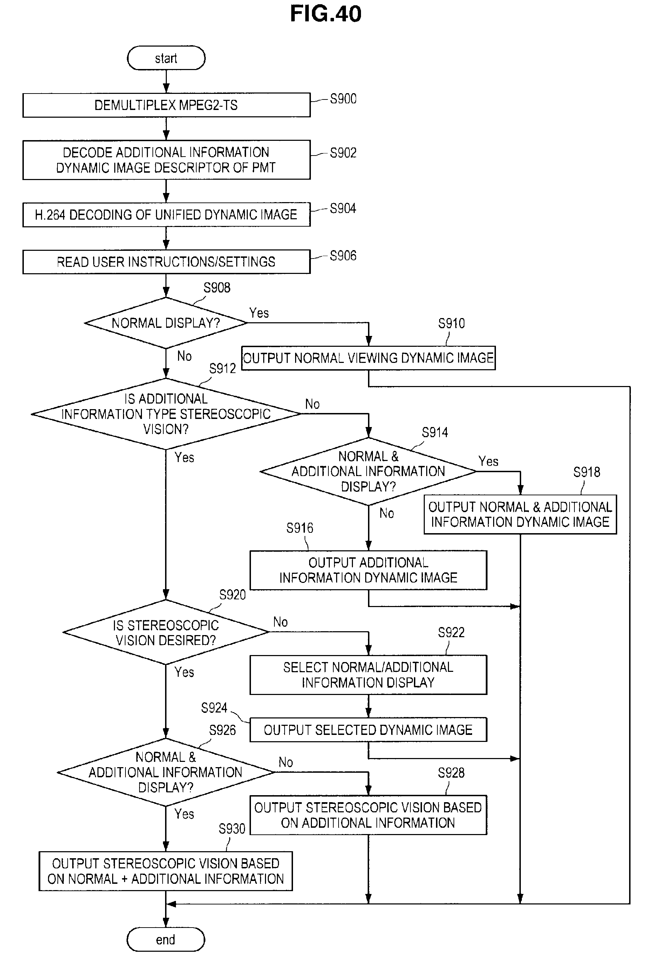

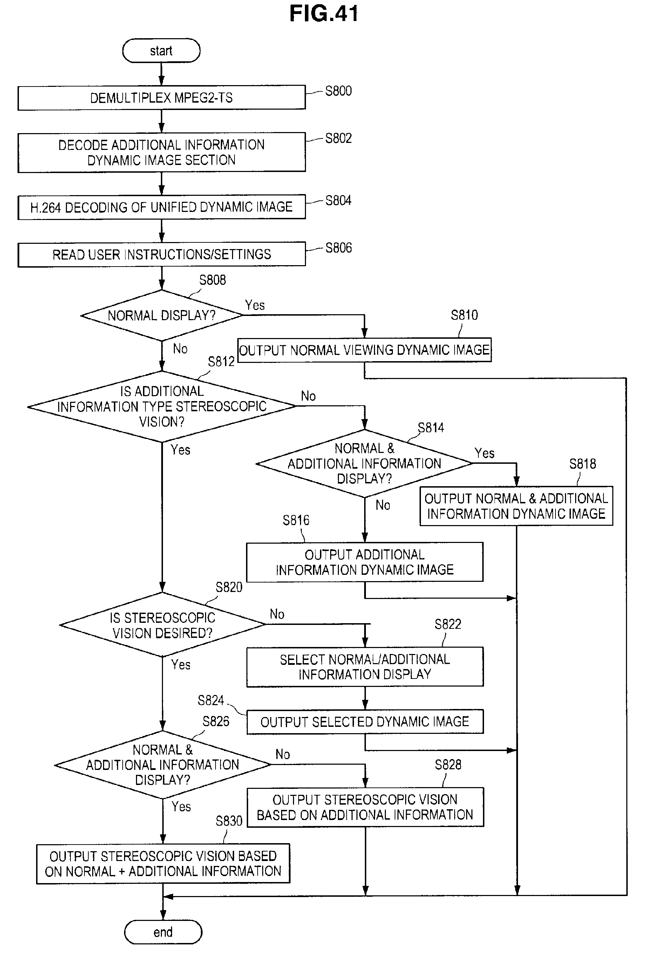

Figs. 39, 40, and 41 show flow charts of the receiver when additional information dynamic image SEI to be added to H.264, an additional information dynamic image descriptor to be added to PMT descriptor, and an additional information dynamic image section to be added to MPEG2-TS are used respectively. In these flow charts, information of the SEI, descriptor, or section is decoded to determine whether there is any additional information dynamic image and, if there is an additional information dynamic image, parameters of the normal viewing dynamic image when the additional information dynamic image is used and the additional information dynamic image are received. A difference among Figs. 39, 40, and 41 is whether parameters are obtained by decoding PSI/SI during demultiplexing in MPEG2-TS (Figs. 40 and 41) or parameters are obtained as a result of decoding in H.264 (Fig. 39). After parameters are received, user settings of the receiver are read to determine whether to make a normal display or use the additional information dynamic image for the display.

When the additional information dynamic image is used, whether to perform stereoscopic vision is determined from user instructions/settings if a stereoscopic dynamic image is contained in the additional information dynamic image (step S920) and if stereoscopic vision is not performed, the dynamic image selected from the normal viewing dynamic image/additional information dynamic image is output (steps S722, S724). If the stereoscopic vision is performed, the stereoscopic vision is presented by outputting the dynamic image in accordance with each viewpoint (steps S730, S830, S930). More specifically, the stereoscopic vision is processed as shown below. First, the receiver 200 receives additional information dynamic image presence information transmitted from the transmitter 100 side. The additional information dynamic image presence information contains information (called stereoscopic vision judgment information) indicating whether the additional information dynamic image is an image used for stereoscopic vision. Next, if the type of additional information dynamic image is stereoscopic vision based on the stereoscopic vision judgment information (YES in steps S712, S812, S912), the receiver 200 outputs the normal viewing dynamic image as a left-eye image and the additional information dynamic image as a right-eye image. On the other hand, if the type of additional information dynamic image is not stereoscopic vision based on the stereoscopic vision judgment information (NO in steps S712, S812, S912), the receiver 200 outputs the normal viewing dynamic image as a normal display. If the type of additional information dynamic image is not stereoscopic vision, like the processing shown by the flow charts in Figs. 36, 37, and 38, the dynamic image selected from the normal viewing dynamic image/additional information dynamic image can also be output (not only one dynamic image, but also a plurality of dynamic images may be combined). Needless to say, the receiver is capable of displaying stereoscopic vision and so the presentation area of the output dynamic image can be moved forward/backward by creating a right-eye dynamic image and a left-eye dynamic image by shifting the selected dynamic image output horizontally.

In this example, the normal viewing dynamic image is set as a left-eye dynamic image, but may also be set as a right-eye dynamic image. If the vertical relationship between the normal viewing dynamic image and the additional information dynamic image is changed, the change can be dealt with by changing parameters of each of dynamic images.

Like this example, the present invention is also valid when the additional information dynamic image is arranged on the side of the normal viewing dynamic image.

### 2. Multi-Eye Stereoscopic Vision Dynamic Image

In stereoscopic vision of the lenticular method or the parallax barrier method, dynamic images of multi-eye stereoscopic vision can be handled. Generally, these methods are called naked 3D (Dimension) methods or glassless 3D methods. In this case, for example, the first and second images are set as images for the left eye and the right eye to enable stereoscopic vision from a first direction and the third and fourth images are set as images for the left eye and the right eye to enable stereoscopic vision from a second direction that is different from the first direction. The present embodiment is also valid when a dynamic image output unit has an image presentation method of these methods and one image of multi-eye stereoscopic vision may be used as the normal viewing dynamic image and remaining images as additional information dynamic images.

As a method of agreeing on the arrangement of additional information dynamic images between transmission and reception, for example, horizontal arrangement of dynamic images of multi-eye stereoscopic vision is agreed and the number of dynamic images arranged horizontally is calculated from the width of the integrated dynamic image and the width of the normal viewing dynamic image.

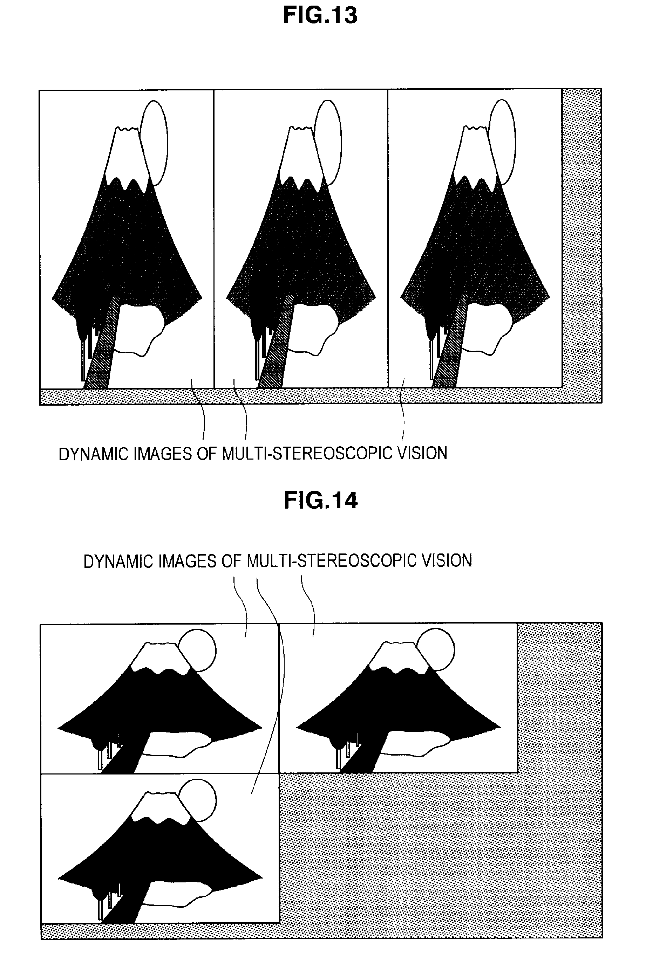

Fig. 13 shows an arrangement state of an integrated image when dynamic images are arranged under the above agreement. According to another agreement, the number of dynamic images of multi-eye stereoscopic vision and the direction of arrangement (for example, horizontally) are agreed on and after as many dynamic images as possible are arranged horizontally, if there is any remaining dynamic image, such images are arranged vertically.
Fig. 14 shows an arrangement state of an integrated image when dynamic images are arranged under the above agreement. Also for Figs. 13 and 14, it is necessary to agree whether images should be spaced. Needless to say, if two types of additional information dynamic images, spaced horizontal three-eye stereoscopic vision and non-spaced horizontal three-eye stereoscopic vision, are prepared and transmitted as additional information dynamic image presence information, which type of an integrated dynamic image can be selected for each piece of content.

### 3. Multi-Eye Stereoscopic Vision and Different Angle Stereoscopic Vision Dynamic Image

Further, as a program, as described in the first embodiment, transmitting video from a different angle can be considered. Because the main video is a stereoscopic vision dynamic image, the video from the different angle is preferably a stereoscopic vision dynamic image in terms of viewing and is assumed to be a stereoscopic vision dynamic image below. Incidentally, the present embodiment is valid even if the different angle video is not a stereoscopic vision dynamic image.

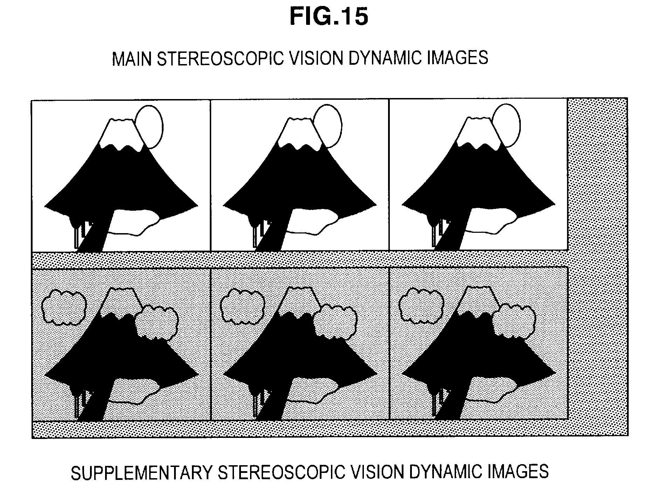

Fig. 15 shows an integrated dynamic image example in which main stereoscopic vision dynamic images are arranged in the upper part and supplementary stereoscopic vision dynamic images are arranged in the lower part. From a program viewpoint, one dynamic image of main stereoscopic vision dynamic images is expected to become the normal viewing dynamic image. Dynamic images excluding the normal viewing dynamic image are all additional information dynamic images. Incidentally, the normal viewing dynamic image is not specifically limited to the arrangement at the upper left corner.

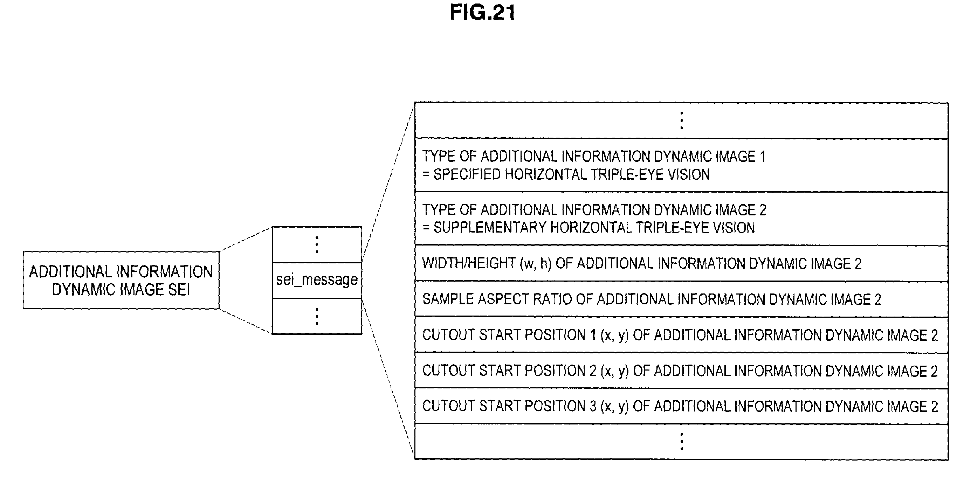

A case when an agreement is made in the same manner as in Fig. 13 between transmission and reception concerning main stereoscopic vision dynamic images and no agreement concerning supplementary stereoscopic vision dynamic images is made is considered. Fig. 21 shows content when additional information dynamic image SEI is newly added to H.264. Content of SEI includes main stereoscopic vision dynamic images which are additional information dynamic images for specified horizontal three-eye vision, and supplementary stereoscopic vision dynamic images which are additional information dynamic images for supplementary horizontal three-eye vision. The supplementary horizontal three-eye vision means the horizontal three-eye vision and containing no normal viewing dynamic image and is assumed to mean being different from simple horizontal three-eye vision.

From the viewpoint of implementation, specifying the following information by using the ID having a bit field as the type of additional information dynamic image can be considered.
· Bit whether to use the normal viewing dynamic image
· Bit whether the cutout region of the normal viewing dynamic image when an additional information dynamic image is used is agreed between the transmitting side and the receiving side
· Bit whether the position of the additional information dynamic image is agreed between the transmitting side and the receiving side
· Bit whether the width/height of the additional information dynamic image is agreed between the transmitting side and the receiving side
· Bit whether the sample aspect ratio of the additional information dynamic image is agreed between the transmitting side and the receiving side
· Bit whether or not stereoscopic vision
· Bit whether to arrange horizontally for stereoscopic vision
· Number of viewpoints for stereoscopic vision

In sei_meesage in Fig. 21, the following information can be determined by specifying additional information dynamic images for specified horizontal three-eye vision:
· Cutout region of the normal viewing dynamic image when main additional information dynamic images are used
· Positions of main additional information dynamic images
· Widths/heights of main additional information dynamic images
· Sample aspect ratios of main additional information dynamic images

Next, additional information dynamic images for supplementary horizontal three-eye vision are specified to specify the positions, widths/heights, and sample aspect ratios of additional information dynamic images for three eyes. In three-eye vision, dynamic images of respective viewpoints are considered to have the same width/height and sample aspect ratio and thus, in Fig. 21, the width/height and the sample aspect ratio are assumed to be common and settings thereof are made once and only the cutout start position is specified for three eyes.

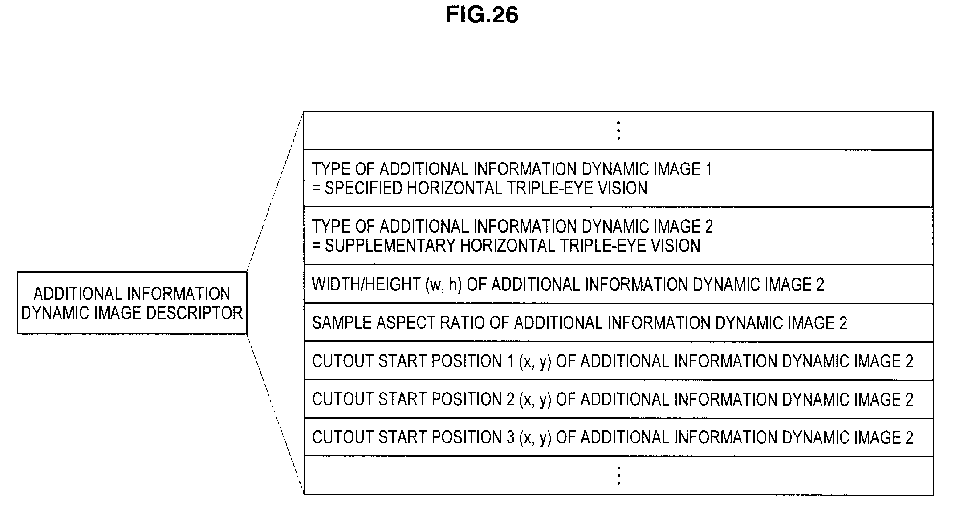

Fig. 26 shows content when an additional information dynamic image descriptor is newly added to a PMT descriptor. Like the SEI in Fig. 21, by specifying additional information dynamic images for specified horizontal three-eye vision,
· Cutout region of the normal viewing dynamic image when main additional information dynamic images are used
· Positions of main additional information dynamic images
· Widths/heights of main additional information dynamic images
Sample aspect ratios of main additional information dynamic images
are determined and next, by specifying additional information dynamic images for supplementary horizontal three-eye vision, the positions, widths/heights, and sample aspect ratios of additional information dynamic images for three eyes can be determined.

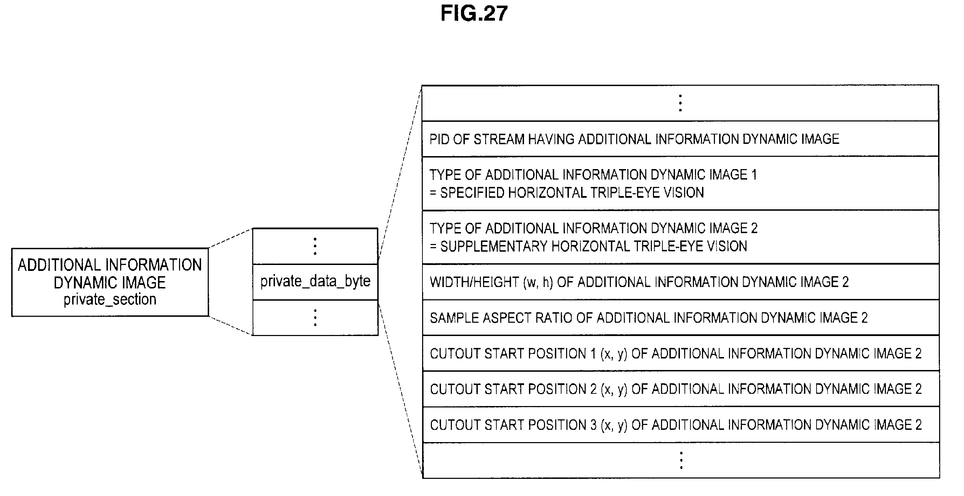

Fig. 27 shows content of private_data_byte when data that transmits additional information dynamic image presence information is added to private section of MPEG2-TS. Specified content is the same as that of the additional information dynamic image SEI other than specifying the PID of the stream in which additional information dynamic images are present.

Like the SEI in FIG. 21,
the following information is determined by specifying additional information dynamic images for specified horizontal three-eye vision:
· Cutout region of the normal viewing dynamic image when main additional information dynamic images are used
· Positions of main additional information dynamic images
· Widths/heights of main additional information dynamic images
· Sample aspect ratios of main additional information dynamic images

Next, by specifying additional information dynamic images for supplementary horizontal three-eye vision, the positions, widths/heights, and sample aspect ratios of additional information dynamic images for three eyes can be determined.

From the foregoing, it is possible to transmit, when the main video is a stereoscopic dynamic image, a stereoscopic dynamic image from a different viewpoint can be transmitted by conforming to the present embodiment. If a stream, including even a stream of main/supplementary stereoscopic dynamic images, conforms to the present embodiment, one-eye dynamic image of main stereoscopic dynamic images can be viewed by the existing receiver 400 as the normal viewing dynamic image. Further, the receiver 200 to which the present embodiment is applied enables viewing of preferred one-eye dynamic images from among main/supplementary stereoscopic dynamic images and main or supplementary stereoscopic dynamic images.

### 4. Double-Eye Stereoscopic Vision Using Additional Information Dynamic Images Having a Different Image Size from That of the Normal Viewing Dynamic Image

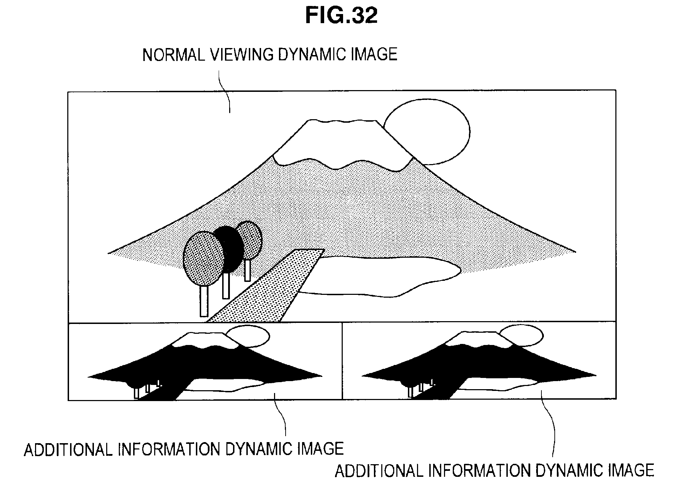

Fig. 31 shows a case when the normal viewing dynamic image is arranged as the left-eye dynamic image of 1440 x 1080 in the integrated image and the additional information dynamic image as the left-eye dynamic image of 480 x 1080 and Fig. 32 shows a case when the normal viewing dynamic image is arranged as a center dynamic image of 1920 x 810 and the additional information dynamic images as two images (left dynamic image, right dynamic image) of 960 x 270.

When multi-eye stereoscopic vision dynamic images are handled in the present embodiment, it is not necessary to handle all viewpoints in the same image size and, like in Figs. 31 and 32, it is possible to increase the information amount of the normal viewing dynamic image and decrease the information amount of additional information dynamic images for transmission (accumulation). In this manner, multi-eye stereoscopic vision dynamic images can be transmitted while inhibiting deterioration of the normal viewing dynamic image.

In actual multi-eye vision, for example, stereoscopic vision output by normal and additional information in Fig. 39, the enlargement ratio of the normal viewing dynamic image and the enlargement ratio of the additional information dynamic image are different and adjustments are made so that the presentation sizes to the left and right eyes become equal. Needless to say, deterioration of reproduced images for the reduced information amount of the additional information dynamic images is feared.

However, the correction function of humans in double-eye stereoscopic vision is superior and a phenomenon in which one-eye image information with more information amount compensates for image information of the other occurs. For example, even a person having different eyesight between the right and left eyes can experience stereoscopic vision. Actually, it has been confirmed that stereoscopic vision can be realized even when a one-eye image is a little blurred and stereoscopic vision is possible even with unbalanced left and right dynamic images in Fig. 39.

Fig. 32 shows dynamic images for three-eye stereoscopic vision and the integrated dynamic image is built by setting the normal viewing dynamic image with a larger information amount as a center dynamic image so that the dynamic image with a larger information amount can be made a right-eye dynamic image or a left-eye dynamic image.

If a dynamic image with a large information amount is used as the right-eye dynamic image, the center dynamic image serving as the normal viewing dynamic image is used for the right eye and the left dynamic image of the additional information dynamic images is used for the left eye. If a dynamic image with a large information amount is used as the left-eye dynamic image, the center dynamic image serving as the normal viewing dynamic image is used for the left eye and the right dynamic image of the additional information dynamic images is used for the right eye. This considers enabling the user to select which eye to use to view the normal viewing dynamic image with a larger amount of information according to user's preferences depending on the left and right eyesight and tiredness of left and right eyes.

The arrangement and images sizes of the normal viewing dynamic image and additional information dynamic images in the integrated dynamic image in Figs. 31 and 32 are examples and do not limit the present invention.

According to the above embodiments, as described above, the normal viewing dynamic image can be viewed even in an existing receiver. If cutout parameters of codec can be correctly processed in a stream created by using the present embodiment, even the existing receiver can cut out the normal viewing dynamic image from within the integrated dynamic image for presentation.

Particularly, H.264 has a coding unit of blocks and normally encodes pixels in units of the number of pixels that is a multiple of 16. On the other hand, 1080 of an image of the number of pixels 1920 x 1080 is not a multiple of 16 and the image is generally encoded by using 1088 and eight lines thereof are discarded for the display. Crop information has been used originally to specify the eight lines to be discarded, but is newly used in the present invention as region information to specify a region of a normal image (a two-dimensional image or non-stereoscopic image) as a totally different form of usage. The present invention can make use of an existing system and so can be realized very efficiently.

Also according to the present embodiment, a new function can be added while maintaining compatibility with an existing receiver so that the user can receive a new service in a desired switching period without being forced to purchase a new TV set for viewing or to view dynamic images causing an uncomfortable feeling. The present embodiment can also be applied a naked 3D type TV set. Accordingly, in a situation in which existing receivers and receivers capable of receiving additional information dynamic images are mixed, transmitters can be changed to transmitters of dynamic images with additional information dynamic images without hindrance on the side of existing receivers. Moreover, the amount of changes of existing transmitters/receivers can be decreased so that development costs can be reduced and prices of transmitters/receivers using the present embodiment can be cut down.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 100: Transmitter
- 102: Dynamic image compression unit
- 104: Normal viewing dynamic image region coding unit
- 106: Additional information dynamic image presence information coding unit
- 200: Receiver
- 202: Dynamic image decompression unit
- 204: Normal viewing dynamic image region decoding unit
- 206: Dynamic image output unit
- 208: Additional information dynamic image presence information decoding unit

## Claims

1. An image receiver comprising:
a receiving unit that receives an integrated image in which a first image and a second image are arranged in one frame; and
an reception unit that receives region information indicating a region of the first image transmitted along with the integrated image,
wherein a non-stereoscopic video display mode in which only the first image is displayed based on the region information and/or a stereoscopic video display mode in which the first image and the second image are displayed as stereoscopic video are included.

2. The image receiver according to claim 1,
wherein the non-stereoscopic video display mode and the stereoscopic video display mode are switched based on stereoscopic vision judgment information indicating that the integrated image is a stereoscopic video.

3. The image receiver according to claim 1,
wherein the first image is a left-eye image and the second image is a right-eye image.

4. The image receiver according to claim 1,
wherein the integrated image and the region information are encoded by an H.264/AVC codec and the region information is Crop parameters.

5. The image receiver according to claim 4,
wherein the Crop parameters are included in a sequence parameter set (SPS).

6. The image receiver according to claim 1,
wherein the integrated image has one or more images further arranged in one frame.
